# EUROPÄISCHE PATENTANMELDUNG

(11) **EP 2 093 003 A1**
(43) Veröffentlichungstag der Anmeldung: **26.08.2009**
(21) Anmeldenummer: 08405051.7
(22) Anmeldetag: 20.02.2008
(51) Int. Cl.: B23C 5/10

(54) **Vollfräswerkzeug**

(71) Anmelder: Fraisa Holding AG, 4512 Bellach (CH)
(72) Erfinder: Maushart, Josef, 4500 Solothurn (CH); Rechberger, Johann, 3068 Utzigen (CH)
(74) Vertreter: Rüfenacht, Philipp Michael

(57) **Zusammenfassung**

Die Erfindung betrifft ein Vollfräswerkzeug (10) zur rotierenden Materialbearbeitung mit einem länglichen Werkzeugschaft (11), welcher einen Arbeitsbereich (13) aufweist, in welchem mantelseitig Schneiden (21) mit zugehörigen Spanflächen und bezüglich einer Drehrichtung hinter den Schneiden angeordnete Freiflächen ausgebildet sind. Dabei ist an wenigstens einer Schneide (21) auf der zugehörigen Freifläche (22) eine Freiflächenfase (30) ausgebildet. Das Vollfräswerkzeug (10) zeichnet sich dadurch aus, dass auf einer Freifläche längs der wenigstens einen Schneide (21) ein Freiflächenabschnitt (31) mit einer glättenden Oberflächenbehandlung versehen ist, sodass eine Rauheit in diesem behandelten Freiflächenabschnitt (31) kleiner ist als eine entsprechende, aufgrund einer durch eine Fertigung des Vollfräswerkzeugs auf Endmass erreichten, Rauheit der übrigen Freifläche. Bevorzugt ist die Freiflächenfase (30) vom behandelten Freiflächenabschnitt (31) vollständig umfasst bzw. der behandelte Freiflächenabschnitt erstreckt sich in azimutaler Richtung über die Freiflächenfase (30) hinaus auf die zugehörige Freifläche (22).

## Beschreibung

### Technisches Gebiet

Die Erfindung betrifft ein Vollfräswerkzeug zur rotierenden Materialbearbeitung mit einem länglichen Werkzeugschaft, welcher einen Arbeitsbereich aufweist, in welchem mantelseitig Schneiden mit zugehörigen Spanflächen und bezüglich einer Drehrichtung hinter den Schneiden angeordnete Freiflächen vorhanden sind, wobei an wenigstens einer Schneide auf der zugehörigen Freifläche eine Freiflächenfase ausgebildet ist.

### Stand der Technik

Fräswerkzeug wie beispielsweise Schaftfräser weisen üblicherweise mehrere Zähne auf. Diese verlaufen um einen azimutalen Winkel zueinander versetzt jeweils wendelförmig um eine Längsachse des Fräsers. An jedem Zahn ist eine Schneide mit einer Spanfläche ausgebildet, welche das Spangut von der Schneide weg leitet. An jede Spanfläche schliesst sich unter einem Keilwinkel eine Freifläche an. Diese weist gegenüber dem Rohlingskreisumfang, aus dem der Arbeitsbereich des Schaftfräsers herausgearbeitet ist, einen Freiwinkel auf. Das heisst, an den einzelnen Freiflächen sind die Werkzeugschneiden gegenüber dem Rohlingskreisumfang hinterschliffen, damit während des Fräsvorschubs ein Festsetzen des Fräsers in dem Werkstück vermieden wird. Um ein Festsetzen sicher zu verhindern, muss die Freifläche gegenüber der Rohlingsumfangsfläche einen gewissen Mindest-Freiwinkel aufweisen.

Ein Verschleiss des Werkzeugs ergibt sich dabei zu einem grossen Teil an einer äusseren Kontaktfläche des Werkzeugs mit dem Werkstück. Die Kontaktflächen ergeben dabei von den Schneiden ausgehende Verschleissmarken auf den zugehörigen Freiflächen. Im Verlaufe der fortschreitenden Erosion des Schneidkeils verbreitern sich aufgrund des Hinterschliffs der Freiflächen die Verschleissmarken. Übersteigen die Verschleissmarkenbreiten einen gewissen Wert, gilt das Werkzeug als verschlissen und muss ausgewechselt bzw. nachgeschliffen werden.

Um einen Kostenaufwand bei der Erneuerung eines Fräswerkzeugs zu verringern, sind Fräswerkzeuge und andere zur spannenden Bearbeitung von Werkstücken vorgesehene Werkzeuge häufig mit ein oder mehreren auswechselbaren Schneidplatten bestückt, die eine gewisse begrenzte Standzeit haben und von Zeit zu Zeit vergleichsweise einfach und kostengünstig ausgewechselt werden können. Schneidplatten weisen aber eine vergleichsweise geringe Fertigungspräzision auf. Ein bevorzugtes Anwendungsgebiet von Schneidplatten liegt daher im Bereich des Drehens, bei welchem das Werkzeug feststeht und somit vergleichsweise einfach und genau zu positionieren ist, während das Werkstück rotiert wird. Ein Schnitt des Werkzeugs wird dabei nicht laufend unterbrochen (wie es beim Fräsen der Fall ist), sondern es wird weitgehend kontinuierlich ein Span von Werkstück abgezogen. Damit werden gänzlich andere Anforderungen an eine Werkzeugschneide gestellt, als beim Präzisionsfräsen. Bei einer rotierenden Werkstückbearbeitung, bei welcher das Werkzeug rotiert wird und das Werkstück feststeht, kommen schneidplattenbesetzte Werkzeuge daher beispielsweise hauptsächlich beim Schruppen bzw. bei allgemeiner vergleichsweise grober räumender Bearbeitung zur Anwendung, bei welcher keine besondere Präzision erforderlich ist. Für eine Präzisions- bzw. Feinbearbeitung von Werkstücken sind Fräswerkzeuge mit Schneidplatten nicht geeignet. Zudem haben schneidplattenbesetzte Fräswerkzeuge eine gewisse Mindestgrösse bzw. - durchmesser aufzuweisen, um die Schneidplatten aufnehmen bzw. halten zu können. Mögliche Durchmesser liegen dabei typischerweise oberhalb von ca. 16 mm. Der Einsatzbereich derartiger Werkzeuge ist damit neben der vergleichsweise geringen Präzision auch durch die Grösse der Werkzeuge eingeschränkt.

Für eine Präzisions- bzw. Feinbearbeitung kommen Vollfräser zur Anwendung, d. h. Fräswerkzeuge, bei welchen die spanabhebenden Schneiden am Werkzeugkörper selbst ausgebildet sind. Vollfräser können auf allen Grössenskalen z.B. aus Schnellarbeitsstahl (HSS) sowie aus Hartmetall, Keramik oder Cermet sowie aus sämtlichen weiteren bekannten Materialien für Fräswerkzeuge gefertigt sein. Verschlissene Schneiden an Vollfräsern können durch Werkzeugschleifen für den weiteren Gebrauch aufgearbeitet werden. Ist ein Nachschleifen nicht mehr möglich, muss das gesamte Werkzeug entsorgt werden. Eine Verlängerung der Standzeit bzw. eine Verbesserung der Verschleisseigenschaften von Vollfräswerkzeugen ist daher besonders wünschenswert.

Die US 5,049,009 (SGS Tool Company) schlägt beispielsweise zur Verlängerung einer Standzeit bei einem Vollfräswerkzeug vor, eine Freifläche längs jeder Schneide mit zwei zur Schneide weitgehend parallelen Segmenten zu versehen, wobei ein an der Schneide angeordnetes Rund-Segment eine Wölbung aufweist, welche dem zylindrischen Grundkörper des Werkzeugs bzw. dem Pfad der Werkzeugschneiden entspricht. Das weitere Segment jeder Freifläche ist eben ausgebildet und weist einen Freiwinkel ungleich Null auf. An derartigen Rund-Segmenten baut sich aber, insbesondere bei hohen Vorschubgeschwindigkeiten des Werkzeugs, ein hoher Druck zwischen Werkstück und Werkzeug auf. Damit verbunden ist ein hohes Mass an Reibung und folglich eine vergleichsweise hohe Temperaturentwicklung, was sich unter anderem auch nachteilig auf einen Verschleiss des Werkzeugs auswirkt.

Andere Versuche wie beispielsweise in der DE 103 32 101 (Kennametal Inc.) zur Verschleissminderung betreffen eine Beschichtung des Werkzeugs mit Hartstoffen, insbesondere mit mehreren Beschichtungen, wobei die Beschichtungen nur gewisse Bereiche bzw. Flächen des Werkzeugs bedecken. Damit können vorteilhafte Eigenschaften bestimmter Beschichtungen nur auf gewissen Flächen zur Wirkung kommen, während die Beschichtungen auf anderen Flächen, wo sich nachteilige Eigenschaften ergäben, nicht vorhanden zu sein brauchen. Derartige Ausführungsformen sind aber aus fertigungstechnischer Sicht sowie hinsichtlich der Fertigungskosten sehr aufwändig.

### Darstellung der Erfindung

Aufgabe der Erfindung ist es daher, ein dem eingangs genannten technischen Gebiet zugehörendes vielseitig anwendbares Vollfräswerkzeug zur Präzisionsbearbeitung zu schaffen, welches bei einer günstigen Herstellung verbesserte Verschleisseigenschaften und eine verlängerte Standzeit aufweist.

Die Lösung der Aufgabe ist durch die Merkmale des Anspruchs 1 definiert. Gemäss der Erfindung umfasst ein Vollfräswerkzeug, insbesondere ein Schaftfräser, zur rotierenden Materialbearbeitung einen länglichen Werkzeugschaft, welcher einen Arbeitsbereich aufweist, in welchem mantelseitig Schneiden ausgebildet sind. Die Schneiden weisen zugehörige Spanflächen und bezüglich einer Drehrichtung hinter den Schneiden angeordnete Freiflächen auf, wobei an wenigstens einer Schneide auf der zugehörigen Freifläche eine Freiflächenfase ausgebildet ist. Die Erfindung zeichnet sich dadurch aus, dass auf der Freifläche längs der wenigstens einen Schneide ein Freiflächenabschnitt mit einer Oberflächenbehandlung versehen ist, sodass eine Rauheit in diesem behandelten Freiflächenabschnitt kleiner ist als eine entsprechende, aufgrund einer durch eine Fertigung des Vollfräswerkzeugs auf Endmass erreichten, Rauheit der übrigen Freifläche.

Gemäss der Erfindung ist es bereits vorteilhaft, wenn der oberflächenbehandelte Freiflächenabschnitt an wenigstens einer Schneide ausgebildet ist. Insbesondere können erfindungsgemäss ausgebildete Schneiden zusammen mit herkömmlichen Schneiden am selben Werkzeug vorgesehen sein. Denkbar sind dabei z. B. Werkzeuge, welche zwei Paare von Schneiden aufweisen, wobei die Schneiden jeweils eines Paares diametral zueinander angeordnet sind und die Schneiden eines ersten Paares erfindungsgemäss ausgebildet sind und einen oberflächenbehandelten Freiflächenabschnitt aufweisen und die Schneiden des anderen Paares anders, z. B. auf herkömmliche Art, ausgebildet sein können. Mit einer derartigen gemischten Ausführung der Schneiden kann beispielsweise das Verhalten des Werkzeugs hinsichtlich auftretender Resonanzen bei der Werkstückbearbeitung verändert bzw. optimiert werden. Besonders bevorzugt sind jedoch Ausführungsformen eines erfindungsgemässen Vollfräswerkzeugs, bei welchem sämtliche Schneiden gemäss der Erfindung ausgebildet sind. D. h. das erfindungsgemässe Vollfräswerkzeug zur rotierenden Materialbearbeitung umfasst vorzugsweise einen länglichen Werkzeugschaft, welcher einen Arbeitsbereich aufweist, in welchem mantelseitig Schneiden ausgebildet sind. Die Schneiden weisen zugehörige Spanflächen und bezüglich einer Drehrichtung hinter den Schneiden angeordnete Freiflächen auf, wobei in diesem Fall an jeder Schneide auf der zugehörigen Freifläche eine Freiflächenfase ausgebildet ist. Erfindungsgemäss ist in diesem Fall längs jeder Schneide ein mit einer glättenden Oberflächenbehandlung versehener Freiflächenabschnitt ausgebildet, sodass eine Rauheit in diesem behandelten Freiflächenabschnitt kleiner ist als eine entsprechende, aufgrund einer durch eine Fertigung des Vollfräswerkzeugs auf Endmass erreichten, Rauheit der übrigen Freiflächen.

Im Folgenden ist ohne Einschränkung der Allgemeinheit die Erfindung anhand von Werkzeugen beschrieben, bei welchen entweder eine beliebige Anzahl von Schneiden bzw. alle Schneiden mit einem erfindungsgemässen oberflächenbehandelten Freiflächenabschnitt versehen sind. Insbesondere können die im Rahmen der Erfindung für die wenigstens eine Schneide beschriebenen Merkmale und Abwandlungen auch auf weitere Schneiden des Werkzeugs bzw. auf jede Schneide des Werkzeugs übertragen werden, sofern eine derartige Ausführung erwünscht bzw. vorteilhaft ist.

Grundsätzlich sind für eine Erhöhung der Standzeit die Verschleisseigenschaften des Werkzeugs zu verbessern. Die Erfindung beruht einerseits auf der neuen und überraschenden Erkenntnis, dass ein initialer Verschleiss des Fräswerkzeugs grossen Einfluss auf einen weiteren Verlauf eines Verschleisses des Werkzeugs hat. Mit "Initialem Verschleiss" ist hierbei ein Verschleiss bezeichnet, welcher sich bei den ersten Eingriffen eines noch unbenutzten Werkzeugs bzw. der Werkzeugschneiden in ein Werkstück ergibt. Versuche der Anmelderin haben gezeigt, dass ein ungünstiger initialer Verschleiss eine spätere Verschleissrate deutlich erhöhen kann. Insbesondere kann sich dabei ein ungünstiger initialer Verschleiss im Laufe des weiteren Werkzeuggebrauchs lawinenartig verstärken. Dieser Effekt ist besonders nachteilig, wenn ein initialer Verschleiss nicht gleichmässig längs einer Werkzeugschneide verteilt ist. Kaum feststellbare Schwankungen im initialen Verschleiss können sich aufgrund der erhöhten Verschleissraten in Bereichen von ungünstigem initialen Verschleiss derart verstärken, dass sich nach vergleichsweise kurzer Benutzungszeit ein deutlich erkennbares Verschleissprofil längs der Schneide ergibt. Dies kann beispielsweise zu Riefen in den Schneiden bzw. den angrenzenden Freiflächenabschnitte führen. Aufgrund der Erosion in Bereichen der Verschleissmaxima kann das Werkzeug in diesem Fall möglicherweise nicht mehr nachgeschliffen werden. Wie sich in den Versuchen der Anmelderin gezeigt hat, ist beispielsweise ein oft auftretender besonders starker Verschleiss am Eingriffsende eines Fräswerkzeugs nicht nur auf eine durchgehend erhöhte Belastung während der Lebenszeit des Werkzeugs zurückzuführen, sondern gründet vielmehr in einem ungünstigen initialen Verschleiss in diesem Bereich. Mit Eingriffsende ist hierbei ein Längenbereich des Werkzeugs bezeichnet, in welchem das Werkzeug in das Werkstück eintritt, d.h. mit anderen Worten derjenige Längebereich, in welchem eine bearbeitete Oberfläche des Werkstücks angeordnet ist. Wird der initiale Verschleiss verbessert bzw. verringert, ergibt sich in der Folge auch eine regelmässigere Abnutzung des Werkzeugs. Insbesondere kann damit der Verschleiss im Bereich des Eingriffsendes derart reduziert werden, dass ein Verschleiss längs der Werkzeugschneide zu einem gewissen Zeitpunkt in allen Bereichen weitgehend vergleichbar, d.h. längs der Werkzeugschneide regelmässig, ist.

Zum anderen liegt der Erfindung die Erkenntnis zugrunde, dass die grösste Beanspruchung bei einem Fräswerkzeug im Wesentlichen in vergleichsweise eng begrenzten Oberflächenabschnitten im Bereich der Schneide des Werkzeugs erfolgt. Insbesondere sind Bereiche der Freifläche besonders belastet, welche sich ausgehend von der Schneidkante des Schneidkeils in diejenigen Bereiche der Freiflächen ausdehnen, die eine Kontaktfläche mit dem Werkstück umfassen. Bei diesen Oberflächenbereichen handelt es sich auch um diejenigen Bereiche, an denen üblicherweise der grösste Verschleiss auftritt. Derartige Bereiche sind bei benutzten bzw. verschlissenen Fräswerkzeugen typischerweise als Verschleissmarken erkennbar, d. h. Oberflächenbereiche, in welchen das Werkzeug durch die Benutzung erodiert bzw. verschlissen ist.

Diesen Erkenntnissen trägt die Erfindung Rechnung, indem zum einen das Werkzeug bereichsweise mit einer glättenden Oberflächenbehandlung versehen ist, um einen günstigen initialen Verschleiss zu erreichen, und zum anderen die mit der Oberflächenbehandlung versehenen Bereiche wenigstens in denjenigen Bereichen ausgebildet sind, welche bei einer Anwendung des Werkzeugs besonders beansprucht werden. Insbesondere sind dies gemäss der Erfindung die oben bereits erwähnten von den Werkzeugschneiden ausgehenden Kontaktflächenbereiche der Freiflächen mit dem Werkstück. Glättende mechanische Oberflächenbehandlungen umfassen hierbei insbesondere eine Oberflächenbehandlung durch mechanische Einwirkung, insbesondere ein glättendes Feinbearbeitungsverfahren wie Schleifen bzw. Feinschleifen und/oder Polituren. Die glättende Wirkung wird bei derartigen Verfahren in der Regel mit zwei Mechanismen erreicht: Zum einen erfolgt ein kleinster bis kleiner Werkstoffabtrag, wodurch Rauhigkeitsspitzen zumindest teilweise abgetragen werden. Zum anderen werden Rauhigkeitsspitzen der Oberflächenstruktur plastisch oder teilplastisch verformt und so geebnet. Je nach Art der Oberflächenbehandlung unterscheiden sich die Anteile des Materialabtrags und der plastischen Verformung. Beim Schleifen bzw. Feinschleifen liegt der Schwerpunkt typischerweise beim Materialabtrag, während beim Polieren die plastische Deformation im Vordergrund stehen kann.

Mit der glättenden Oberflächenbehandlung der besonders beanspruchten Abschnitte längs der Werkzeugschneiden auf den Freiflächen wird erreicht, dass ein anfänglicher Verschleiss des Werkzeugs bei den ersten Eingriffen der Schneiden in ein Werkstück auf vorteilhafte Art reduziert bzw. kontrolliert werden kann. Überraschenderweise werden die mit der Oberflächenbehandlung versehenen Freiflächenabschnitte mit verminderter Rauheit nicht, wie es möglicherweise erwartet werden könnte, im Laufe der ersten Eingriffe der Zähne des Fräswerkzeugs in das Werkstück wegerodiert bzw. aufgeraut.

Vielmehr ergibt sich aufgrund der glättenden Oberflächenbehandlung der Freiflächenabschnitte beim erstmaligen Eingriff in ein Werkstück eine vergleichsweise geringe Aufrauung dieser Abschnitte. Mit anderen Worten wird ein erfindungsgemässes Fräswerkzeug beim erstmaligen Eingriff der Schneiden in ein Werkstück aufgrund der Oberflächenbehandlung weniger stark "angefressen" bzw. verschlissen, wodurch sich für eine weitere Abnutzung der Werkzeugs weniger Angriffsfläche bietet. Zum anderen erfolgt ein intitaler Verschleiss damit auch regelmässiger und mit geringeren Schwankungen über die Werkzeugschneiden verteilt. Das auf diese Art erzielte, verbesserte initiale Verschleissverhalten setzt sich bei der weiteren Anwendung des Werkzeugs einerseits in einer verminderten Verschleissrate und andererseits in einem regelmässigeren Verschleiss längs der Schneiden fort und begünstigt somit eine Verlängerung der Standzeit des Werkzeugs. Insbesondere begünstigt ein regelmässiger Verschleiss längs der Schneiden auch ein Nachschleifen des Werkzeugs.

Bei Vollfräswerkzeugen mit direkt am Schaft ausgebildeten Schneiden ist eine grossflächige glättende Oberflächenbehandlung längs beispielsweise wendelförmiger Schneiden problematisch umzusetzen. Eine Beschränkung auf behandelte Bereiche geringer flächenmässiger Ausdehnung ist damit für eine wirtschaftliche und vereinfachte Herstellung des Fräswerkzeugs wünschenswert und vorteilhaft. Gemäss der Erfindung brauchen sich die oberflächenbehandelten Freiflächenabschnitte gar nicht über die gesamte Freifläche des Schneidkeils zu erstrecken. Vielmehr kann eine azimutale Ausdehnung der behandelten Freiflächenabschnitte nur einen kleinen Bruchteil der Freifläche ausmachen, insbesondere auf die besonders beanspruchten Bereiche beschränkt bleiben. Die aufwändige und schwierig auszuführende glättende Oberflächenbehandlung kann somit wirtschaftlich und herstellungstechnisch günstig auf Bereiche mit geringer Flächenausdehnung beschränkt bleiben. Insbesondere erstreckt sich der mit der Oberflächenbehandlung vergütete Freiflächenabschnitt bevorzugt nur in diejenigen Bereiche der Freiflächen, welche von den im Laufe der Werkzeuglebensdauer zu erwartenden Verschleissmarken betroffen sind. Azimutale Breiten von Verschleissmarken, bei welchen ein Werkzeug üblicherweise als noch nicht vollständig verschlissen angesehen wird, liegen etwa im Bereich unterhalb von 150 bis 200 Mikrometern.

Eine konkrete azimutale Dimension der vergüteten Freiflächenabschnitte kann auch in Abhängigkeit von der Bauart und Baugrösse des Fräswerkzeugs, beispielsweise in Abhängigkeit von dessen Durchmesser, definiert sein. Es hat sich jedoch als vorteilhaft herausgestellt, die azimutale Ausdehnung der vergüteten Freiflächenabschnitte unabhängig von der Grösse des Werkzeugs im Wesentlichen konstant zu halten. Insbesondere kann damit die Fertigung der Fräswerkzeuge auf verschiedenen Grössenskalen aufgrund der vereinheitlichten Dimension der vergüteten Freiflächenabschnitte deutlich vereinfacht werden. Je nach Anwendung kann es aber auch vorteilhaft sein, die azimutale Ausdehnung der vergüteten Freiflächenabschnitte beispielsweise in Abhängigkeit der Eingriffsbedingung zu definieren bzw. entsprechend anzupassen. Grundsätzlich sind jedoch Ausführungen des Vollfräswerkzeugs bevorzugt, bei welchen die vergüteten Freiflächenabschnitte eine möglichst geringe Fläche überdecken und die Wirtschaftlichkeit bei der Herstellung sowie die standzeitverlängernden Eigenschaften gewährleistet bleiben.

Bevorzugt werden bei der Herstellung des Fräswerkzeugs die entsprechenden Freiflächenabschnitte mit der glättenden Oberflächenbearbeitung versehen, nachdem im Arbeitsbereich des Fräswerkzeugs die Schneiden sowie die zugehörigen Span- und Freiflächen ausgebildet worden sind. Im erfindungsgemässen Verfahren zur Herstellung des Fräswerkzeugs wird ein Arbeitsbereich des Vollfräswerkzeugs mit Schneiden und zugehörigen Spanflächen sowie bezüglich einer Drehrichtung hinter den Schneiden angeordneten Freiflächen versehen. Dabei wird an wenigstens einer Schneide eine Freiflächenfase auf der zugehörigen Freifläche ausgebildet. Das Verfahren ist **dadurch gekennzeichnet, dass** ein Freiflächenabschnitt der Freifläche wenigstens einer Schneide, vorzugsweise jedoch Freiflächenabschnitte jeder Freifläche, nach der Fertigung des Vollfräswerkzeugs auf Endmass mit einer glättenden Oberflächenbehandlung versehen wird.

Zur Ausbildung des Werkzeugs ist beispielsweise denkbar, dass ein gesinterter Rohling bereits die Endmasse des Fräswerkzeugs aufweist und/oder dass das Werkzeug durch Schleifen auf Endmass gebracht wird. Unabhängig von dem Verfahren zur Ausgestaltung des Fräswerkzeugs wird die glättende Oberflächenbehandlung erst vorgenommen, nachdem das Werkzeug im Wesentlichen auf Endmass gebracht wurde. Erfindungsgemäss wird die Oberflächenbehandlung insbesondere nach einer Ausbildung der Schneiden, Span- und Freiflächen vorgenommen, sodass die Oberflächenbehandlung nicht durch spätere Bearbeitungsschritte zerstört wird bzw. werden kann. Insbesondere kann ein Herstellungsverfahren bevorzugt sein, welches die glättende Oberflächenbehandlung der Freiflächenabschnitte als letzten mechanischen Arbeitsschritt bei der Herstellung des Werkzeugs vorsieht.

Erfindungsgemäss kommt eine Oberflächenbehandlung zum Einsatz, welche eine Rauheit der behandelten Freiflächenabschnitte derart zu verringern vermag, dass die sich ergebende Rauheit geringer ist, als die entsprechende Kenngrösse, welche sich aufgrund der Arbeitsschritte zu Fertigung des Werkzeugs auf Endmass ergibt. Insbesondere ist die Rauheit in den behandelten Freiflächenabschnitten geringer als eine Rauheit unbehandelter Bereiche der Freiflächen. Mit Rauheit ist hierbei eine Unebenheit von Oberflächen bezeichnet, zu deren quantitativen Charakterisierung unterschiedliche Berechnungsverfahren verschiedene Eigenschaften der Oberfläche berücksichtigen. Ohne Einschränkung der Allgemeinheit seien hier als typische Kennwerte die bekannten Rₐ "mittlere Rauheit" (arithmetisches Mittel der Abweichung von einem Mittelwert), Rq "quadratische Rauheit" (Mittel der Abweichungsquadrate; auch "root-mean-square roughness") und R_{z} "gemittelte Rauheit" (Mittelwert aus der betragsmässigen Maximum-Minimum-Differenz von 10 Einzelmessstrecken; auch "Zehnpunktehöhe") genannt.

In einer bevorzugten Ausführungsform eines erfindungsgemässen Werkzeugs erstreckt sich der oberflächenbehandelte Freiflächenabschnitt ausgehend von der wenigstens einen Schneide nicht weiter als 100 Mikrometer in azimutaler Richtung auf die zugehörige Freifläche. Damit wird einerseits erreicht, dass zwar die besonders beanspruchten Bereiche der Freiflächen eine Oberflächenvergütung aufweisen, der Bereich der zu behandelnden Oberflächen aber nicht über ein erforderliches Mass hinaus ausgedehnt wird. Je nach Anforderungen kann aber auch trotz des grösseren Aufwandes ein oberflächenbehandelter Bereich mit einer azimutalen Ausdehnung grösser als 100 Mikrometer als vorteilhaft erachtet werden.

Mit Vorteil ist der behandelte Freiflächenabschnitt derart ausgebildet, dass die Freiflächenfase des Werkzeugs vollständig vom Freiflächenabschnitt umfasst ist, d. h. vollständig innerhalb des mit der Oberflächenbehandlung versehenen Freiflächenabschnitts liegt. Damit wird erreicht, dass im gesamten Bereich der Freiflächenfase die erfindungsgemässe Oberflächenvergütung vorhanden ist. Dies ist insbesondere insofern relevant, als dass die Freiflächenfase bzw. Bereiche der Freiflächenfase an der Schneide eine erste Kontaktfläche des Werkzeugs mit dem Werkstück bei einer Erstbenutzung des Werkzeugs bildet. Ein initialer Verschleiss ist daher besonders durch die Ausgestaltung der Freiflächenfase bestimmt. Vorteilhaft ist hierbei auch eine Erstreckung des behandelten Freiflächenabschnitts in azimutaler Richtung über die Freiflächenfase hinaus auf die übrige zur entsprechenden Schneide gehörige Freifläche. Damit weist ein unmittelbar an die Freiflächenfase angrenzender Bereich der Freifläche ebenfalls die erfindungsgemäss durch eine Oberflächenbehandlung verringerte Rauhigkeit auf. Bei einer Ausdehnung der Verschleissmarke von der Freiflächenfase auf die übrige Freifläche im Verlaufe der Werkzeugabnutzung ergibt sich somit aufgrund der geringen Rauhigkeit im Übergangsbereich ein glatter Übergang von der Verschleissmarke auf die angrenzenden Freiflächenbereiche. Insbesondere weist der Übergang eine vergleichsweise geringe Schartigkeit bzw. eine vergleichsweise scharfe Kante auf. Insbesondere wird damit ein Ausbrechen oder Abbröckeln bzw. Ausfransen der Verschleissmarken am Übergang zur Freifläche verringert, was sich günstig auf die Verschleisseigenschaften des Werkzeugs auswirkt.

In anderen Varianten kann der vergütete Freiflächenabschnitt mit der Freiflächenfase zusammenfallen. D. h. am Werkzeug ist nur die Freiflächenfase mit einer erfindungsgemässen Oberflächenvergütung versehen, während die übrige Freifläche keine nachbearbeitete Oberfläche aufweist. In diesem Fall kann zwar die Freiflächenfase beispielsweise direkt durch die Oberflächenbehandlung auf der Freifläche ausgebildet werden. Erstreckt sich die Verschleissmarke jedoch über die Freiflächenfase auf die Freifläche hinaus, ergibt sich ein vergleichsweise schartiger Übergang, was ein Ausbröckeln am Übergang begünstigen kann.

Hinsichtlich einer azimutalen Breite der Freiflächenfasen hat sich herausgestellt, dass diese bevorzugt grösser als typische initiale Verschleissmarkenbreiten bei unverschlissenen Fräswerkzeugen ist. Die initialen Verschleissmarkenbreiten bezeichnen hierbei eine azimutale Dimension der Verschleissmarken, wie sie sich bei einem erstmals benutzten Fräswerkzeug nach den einigen ersten Eingriffen in ein Werkstück in etwa ergeben. Derartige Verschleissmarkenbreiten liegen typischerweise in einem Bereich um 3 bis 5 Mikrometer. Mit Vorteil weisen die Freiflächenfasen eines erfindungsgemässen Werkzeugs daher eine azimutale Breite auf, welche bevorzugt grösser als 5 Mikrometer und mit Vorteil kleiner als etwa 70 Mikrometern ist, insbesondere in einem Bereich von etwa 30 bis 50 Mikrometern liegt.

Die Freiflächenfase ist gegenüber der restlichen Freifläche durch einen Freiwinkel abgesetzt, welcher sich von dem Freiwinkel der übrigen Freifläche unterscheidet. Mit Freiwinkel ist hier der Winkel zwischen dem entsprechenden Freiflächenabschnitt und der Werkzeug-Schneidenebene der zugehörigen Schneide bezeichnet. Vorzugsweise ist dabei ein Freiwinkel der übrigen Freifläche grösser, vorzugsweise deutlich grösser als der Freiwinkel der Freiflächenfase. Gemäss der Erfindung ist ein Freiwinkel der Freiflächenfase mit Vorteil so klein als möglich zu wählen, um einen möglichst kontrollierten Kontakt der Schneide bzw. eines an die Schneide angrenzenden Bereichs der Freifläche mit dem Werkstück herzustellen. Mit einer guten Kontrolle des Kontaktes zum Werkstück kann auch ein initialer Verschleiss gut kontrolliert und minimiert werden.

Wie eingangs beschrieben gilt ein Vollfräswerkzeug als verschlissen und muss ausgewechselt bzw. nachgeschliffen werden, wenn die azimutalen Verschleissmarkenbreiten einen gewissen Wert übersteigen. Um die Standzeit des Fräswerkzeugs zu verlängern ist daher mit Vorteil eine Zuwachsrate der Verschleissmarkenbreiten bei einem Fräswerkzeug zu minimieren. Der Freiwinkel der übrigen Freifläche ist daher möglichst gross zu wählen, sodass die Freifläche hinter der Freiflächenfase vergleichsweise steil weggeneigt ist, sodass eine Verschleissmarkenbreite mit einem radialen Verschleiss des Schneidkeils langsamer zunimmt. Auch tiefere Kerben und Riefen, wie sie sich im Laufe des Verschleisses an den Verschleissmarken ergeben können, sind somit in azimutaler Richtung auf einen geringeren, besser definierten Freiflächenbereich beschränkt und setzen sich weniger weit auf die angrenzenden Freiflächenbereiche fort, als im Falle von kleineren Freiwinkel.

Typische Freiwinkel der Freiflächen bei herkömmlichen Werkzeugen liegen in einem Bereich oberhalb von 7 Grad. Die Freiwinkel der Freiflächen sind dabei so gewählt, dass das Fräswerkzeug frei schneidet, d. h. ein Vortrieb des Werkzeugs durch die Flächen hinter den Schneiden nicht behindert wird. Dabei kann der Freiwinkel jedoch nicht beliebig gross gewählt werden, um beispielsweise eine mechanische Stabilität sowie eine hinreichende Wärmeabfuhr des Schneidzahnes sicherzustellen. Es hat sich gezeigt, dass bei einer erfindungsgemässen Ausbildung des Fräswerkzeugs Werte für Freiwinkel der Freiflächen im Bereich von 25 bis 35 Grad liegen können und dabei die Vorteile einer vergleichsweise langsam zunehmenden Verschleissmarkenbreite mit einer hinreichend guten Stabilität und Wärmeabfuhr des Schneidzahns kombiniert werden. Insbesondere kann der Freiflächenbereich mit grossem Freiwinkel vergleichsweise nahe an eine Werkzeugschneide heranreichen, d.h. bis an die Freiflächenfase heran.

Die Freiflächenfase weist im Gegensatz zu der übrigen Freifläche erfindungsgemäss einen sehr geringen Freiwinkel auf. Mit einem kleinen Freiwinkel der Freiflächenfase wird bei einem ersten Eingriff der Schneiden in ein Werkstück ein möglichst flacher Eingriff der Freiflächenfasen gewährleistet, d. h. die Freiflächenfasen liegen möglichst parallel zu einer Schnittfläche im Werkstück und folgen annähernd einer Flugkurve der Schneiden ohne jedoch einen Kontakt über die gesamte azimutale Breite der Freiflächenfase mit dem Werkstück herzustellen. Es hat sich gezeigt, dass Freiwinkel der Freiflächenfase, welche im Bereich von 1 bis 7 Grad liegen, besonders gute Ergebnisse hinsichtlich eines initialen Verschleisses ergeben. Insbesondere sind die Werte hierbei möglichst klein zu wählen, wobei ein optimierter Wert beispielsweise von den Anforderungen an das Werkzeug und oder der Beschaffenheit des zu bearbeitenden Werkstücks abhängt. Die Freiflächenfase bildet somit, insbesondere in Verbindung mit der geringen azimutalen Breite von etwa 30 bis 50 Mikrometern und vorzugsweise bei einer Überdeckung durch den erfindungsgemäss oberflächenbehandelten Freiflächenabschnitt, eine flächenmässig kleine und gut definierte Kontaktfläche des Werkzeugs mit dem bearbeiteten Werkstück.

In einer bevorzugten Ausführung des erfindungsgemässen Fräswerkzeugs umfasst ein Übergang der Freiflächenfase in die übrige Freifläche eine Kante, in welcher die Freiflächenfase und die übrige Freifläche aneinander stossen. Mit anderen Worten geht die Freiflächenfase in genau einer Kante in die zugehörige Freifläche über. Die Kante ist dabei mit Vorteil weitgehend parallel zur zugehörigen Werkzeugschneide angeordnet. In einer weiteren bevorzugten Ausführungsform ist die Freiflächenfase über die übrige Freifläche erhaben, d. h. die übrige Freifläche ist im Bereich des Übergangs gegenüber der Freiflächenfase im Wesentlichen radial nach innen versetzt. Insbesondere ist dabei die Freiflächenfase von der übrigen Freifläche stufenartig abgesetzt. Stufenartig bezeichnet hier einen Absatz bzw. einen Rücksprung oder gestuften Hinterschnitt hinter der Freiflächenfase bzw. zwischen der Freiflächenfase und der übrigen Freifläche. Der Rücksprung umfasst beispielsweise eine weitgehend radial angeordnete oder eine geneigte Übergangsfläche. Im Falle einer ebenen Übergangsfläche ist ein Freiwinkel der Übergangsfläche grösser als der Freiflächen-Freiwinkel und grösser als der Freiwinkel der übrigen Freifläche. Der Rücksprung im Übergang der Freiflächenfase zur übrigen Freifläche kann aber beispielsweise auch eine konkave oder andersartig gekrümmte Übergangsfläche aufweisen, welche glatt und/oder in einer Kante in die Freiflächenfase bzw. die übrige Freifläche übergeht. Mit anderen Worten ergeben sich aufgrund des Rücksprungs längs der Schneiden leistenartige Vorsprünge auf den Freiflächen, auf deren, bezüglich der Rotationsachse des Werkzeugs, mantelseitigen Oberflächen die Freiflächenfasen angeordnet sind.

Die leistenartigen Freiflächenvorsprünge bilden damit einerseits Bereiche an den Schneiden des Werkzeugs, auf welchen die Freiflächenfasen ausgebildet sind. Andererseits bilden die Freiflächenvorsprünge auf den Freiflächen ausgebildete Soll-Verschleissbereiche, d. h. Verschleissleisten der Schneidkeile, welche bei der Benutzung des Werkzeugs erodiert werden. Indem ein gewisser Bereich des Werkzeugs für eine Erosion vorgesehen ist, kann ein Verschleiss kontrolliert werden. Aufgrund einer Querschnittsgeometrie der Freiflächenleisten senkrecht zur Längsrichtung des Werkzeugs kann beispielsweise eine Erosionsrate der Leisten vorgegeben werden. Insbesondere kann damit auch eine Rate der Verbreiterung der Verschleissmarken im Laufe eines Verschleisses des Werkzeugs vorgegeben werden, wobei es beispielsweise möglich ist, eine Verschleissmarkenbreite weitgehend konstant zu halten. Die Leisten begrenzen hierbei auch eine azimutale Länge von tieferen Riefen und Kerben an den Verschleissmarken, wie sie im Verlaufe des Verschleisses auftreten können. Solange die Tiefen der Kerben kleiner als die momentane Höhe der Verschleissleiste sind, können sich die Kerben nicht auf die angrenzenden Freiflächenbereiche fortsetzen, sondern enden an der Übergangsfläche des Rücksprungs. Gesamthaft lässt sich somit ein Verschleiss in azimutaler Richtung auf einen definierten Bereich beschränken und damit besser kontrollieren.

Sind die leistenartigen Vorsprünge bzw. die Freiflächenverschleissleisten vollständig erodiert, beginnt eine Erosion der übrigen Freiflächen und eine Rate der Verschleissmarkenverbreiterung steigt, je nach Ausgestaltung der Übergangsfläche, sprunghaft oder kontinuierlich an. Bei dieser Ausführungsform ist das Werkzeug verschlissen, wenn die Freiflächenleisten vollständig erodiert sind. Damit ergibt sich aufgrund der Rücksprünge bzw. der sich daraus ergebenden Verschleissleisten ein konstantes Werkzeug- bzw. Schneidverhalten, im Wesentlichen über die gesamte Lebensdauer des Werkzeugs:

Mit Vorteil weist auch die Spanfläche der wenigstens einen Schneide eines erfindungsgemässen Vollfräswerkzeugs an der Schneide eine Abfasung, d. h. eine Spanflächenfase, auf. Wie bereits zuvor festgehalten, können auch in diesem Fall die Spanflächen aller Schneiden eine entsprechende, wie im Folgenden beschriebene Spanflächenfase aufweisen. Die Spanflächenfase ist dabei weitgehend parallel zur zugehörigen Schneide ausgebildet und begünstigt eine Spanbildung bzw. eine Spanabfuhr, insbesondere eine Spanablösung von der Spanfläche. Der Span gleitet in diesem Fall im Wesentlichen nur auf der Spanflächenfase ab und löst sich in einem Übergangsbereich von der Spanflächenfase auf die übrige Spanfläche von dieser ab. In Kombination mit den weiteren beschriebenen Merkmalen des erfindungsgemässen Vollfräswerkzeugs ergeben sich durch diese Geometrie des Schneidzahnes bzw. dessen Spanfläche weiter verbesserte Werkzeugeigenschaften bzw. Verschleisseigenschaften, beispielsweise bei der Spanbildung bzw. der Spanabfuhr. Insbesondere ist ein Spanwinkel der Spanflächenfase betragsmässig grösser als ein Spanwinkel der übrigen Spanfläche. Bevorzugt weist ein erfindungsgemässes Vollfräswerkzeug einen Spanwinkel der Spanfläche auf, welcher negativ ist. Negative Spanwinkel bezeichnen hierbei Spanflächen, welche in azimutaler Richtung in einer Rotationsrichtung vor der zugehörigen Schneide liegen, während positive Spanwinkel zu Spanflächen gehören, welche hinter einer Schneide angeordnet sind.

Ein Keilwinkel eines Schneidenkeils, welcher durch einen zwischen den Freiflächen und den entsprechenden Spanflächen liegenden Winkel gegeben ist, ist bevorzugt grösser oder gleich 90 Grad, d. h. der Keilwinkel ist bevorzugt stumpf. Insbesondere ist dabei ein Winkel zwischen der Freiflächenfase und der Spanfläche bzw. der Spanflächenfase ebenfalls ein stumpfer Winkel. Grundsätzlich können auch spitze Keilwinkel bei einem erfindungsgemässen Fräswerkzeug ausgebildet sein. Es hat sich aber gezeigt, dass entgegen der gängigen Lehrmeinung ein stumpfer Keilwinkel nicht nur bei harten Werkstücken vorteilhaft ist. Vielmehr vermögen stumpfe Keilwinkel an den Schneiden auch bei weichen Werkstücken wie beispielsweise INOX eine Spanbildung sowie eine Laufruhe des Vollfräswerkzeugs oder eine Geräuschentwicklung bei der Werkstückbearbeitung vorteilhaft zu beeinflussen.

Mit Vorteil beträgt eine Breite der Spanflächenfasen einen Wert von weniger als 0.5 mm. Es ist in weiteren Varianten zwar durchaus möglich, die Breite der Spanflächenfasen auch über diesen Wert hinaus zu erstrecken, es hat sich aber herausgestellt, dass grössere Werte sich nachteilig auf das Spanablöseverhalten auswirken können. Besonders bevorzugt ist eine Breite der Spanflächenfasen in einem Bereich um etwa 0.5 mm.

Neben den oben beschriebenen besonders beanspruchten Bereichen der Freifläche sind auch Bereiche der Spanflächen während des Schneidvorgangs stark beansprucht. Insbesondere sind an die Werkzeugschneide angrenzende Bereiche der Spanflächen wesentlich an einer Spanbildung beteiligt. Eine bevorzugte Ausführungsform der Erfindung umfasst daher auch von den Werkzeugschneiden ausgehende Spanflächenabschnitte, insbesondere einen Spanflächenabschnitt auf der Spanfläche wenigstens einer Schneide des Werkzeugs, welche mit einer glättenden Oberflächenbehandlung versehen sind. Diese behandelten Spanflächenabschnitte erstrecken sich dabei bevorzugt über die im Wesentlichen gesamte Länge jeder Schneide. Bevorzugt ist eine Rauheit der behandelten

Spanflächenabschnitte mit der entsprechenden Rauheit der ersten Freiflächenabschnitte vergleichbar. Eine Rauheit der übrigen Spanflächenbereiche kann dabei einer Rauheit entsprechen, wie sie bei der Fertigung des Werkzeugs auf Endmass ohne nachträgliche Oberflächenbearbeitung erreicht wird.

Insbesondere werden bei der Herstellung des Fräswerkzeugs die behandelten Spanflächenabschnitte mit einer Oberflächenbehandlung nachbearbeitet, welche weitgehend der Oberflächenbehandlung der behandelten Freiflächenabschnitte entspricht. Die Oberflächenbehandlung der behandelten Spanflächenabschnitte erfolgt erfindungsgemäss nach einer Fertigung des Vollfräswerkzeugs auf Endmass. Die behandelten Spanflächenabschnitte erstrecken sich dabei bevorzugt im Wesentlichen von der Schneide in einen beschränkten Bereich der Spanfläche. Grundsätzlich können aber auch die gesamten Spanflächen glättend bearbeitet sein, d. h. eine Oberflächenbehandlung bzw. Oberflächenvergütung aufweisen. Die behandelten Spanflächenabschnitte überdecken dann jeweils die gesamte Spanfläche. Mit einer Oberflächenvergütung der gesamten Spanfläche wird erreicht, dass auch nicht primär an der Spanbildung beteiligte Bereiche der Spanflächen die verschleissmindernden Vorteile der glättenden Oberflächenbehandlung aufweisen.

Indem die Freiflächenfasen und die Spanflächen bzw. die Spanflächenfasen im Bereich der Schneide oberflächenbearbeitet sind wird erreicht, dass in einer Umgebung der Schneiden das Werkzeug weitgehend gleichmässig verschleisst, insbesondere sich über die im Wesentlichen gesamte Länge der Schneide ein möglichst regelmässiger initialer Verschleiss ergibt. Zudem kann eine zwischen Freiflächenfase und Spanfläche bzw. Spanflächenfase angeordnete Schneide des Werkzeugs aufgrund der verminderten Rauheit der angrenzenden Flächenabschnitte genau definiert bzw. vergleichsweise "scharfkantig" sein, d. h. die Schneidkanten weisen eine vergleichsweise geringe Schartigkeit auf.

Mit Vorteil ist die Spanflächenfase des Werkzeugs dabei derart ausgebildet, dass sie vollständig innerhalb des behandelten Spanflächenabschnitts liegt, d. h. die Spanflächenfase ist vollständig vom oberflächenbehandelten Spanflächenabschnitt umfasst. Damit wird erreicht, dass im gesamten Bereich der Spanflächenfase die Rauheit durch die glättende Oberflächenbearbeitung verringert ist. Dies ist insofern besonders vorteilhaft, dass aufgrund der Abfasung der Spanfläche ein Span im Wesentlichen auf der Spanflächenfase abgleitet und mit der übrigen Spanfläche kaum oder gar nicht in Berührung kommt. Damit werden einerseits durch die Geometrie des Schneidzahnes (Spanflächenfase) eine Spanbildung sowie eine Spanabfuhr begünstigt und andererseits aufgrund der Oberflächenbeschaffenheit (vollständige Oberflächenvergütung der Spanflächenfase) der behandelten Spanflächenabschnitte ein Verschleiss, insbesondere ein initialer Verschleiss, verringert. Der behandelte Spanflächenabschnitt kann sich aber mit Vorteil auch über die Spanflächenfase hinaus auf die übrige Spanfläche erstrecken, sodass auch in einem Bereich um den Übergang der Spanflächenfase auf die Spanfläche die verminderte Rauheit vorhanden ist.

Weitere Ausführungsformen des erfindungsgemässen Vollfräswerkzeugs weisen Schneidkanten auf, welche sich nicht durch direktes aneinander stossen der Freiflächenfasen und Spanflächen/Spanflächenfasen ergeben. Vielmehr umfassen die Schneidkanten bei derartigen Ausführungsformen Schneidenflächen, welche Übergangsflächen zwischen den Freiflächen und Spanflächen bzw. den angrenzenden Fasen bilden. In einer besonders bevorzugten Ausführungsform gehen die Freiflächenfasen über Schneidenflächen in die Spanflächen bzw. Spanflächenfasen über, wobei insbesondere die Schneidenflächen gewölbt sind, sodass die Schneidkanten eine Kantenverrundung aufweisen. Derartig verrundete Schneidkanten haben den Vorteil, dass sie bei einem Verschleiss nicht Ausbrechen wie scharfe Schneidkanten und aufgrund der sich ergebenden Schartigkeit den weiteren Verschleiss ungünstig beeinflussen. Vielmehr kommt es aufgrund der Verrundung zu einem gleichmässigeren Abschleifen d. h. zu einem gleichmässigen Verschleiss der Schneiden, was gesamthaft eine geringere Verschleissrate und damit eine erhöhte Standzeit ergibt. Insbesondere können dabei vorzugsweise alle Schneidkanten verrundet sein oder aber es weist nur eine Teilmenge der am Werkzeug ausgebildeten Schneiden, insbesondere aber wenigstens eine Schneide, die Kantenverrundung auf.

Grundsätzlich sind auch Varianten von Schneidkanten denkbar, bei welchen sich eine Schneidengeometrie beispielsweise durch Abfasen einer scharfen Schneidkante ergibt, d. h. die Schneidenflächen ebene Flächen sind. Die Schneidenflächen stossen in diesem Fall beispielsweise in jeweils einer gemeinsamen Kante an die zugehörige Freifläche und Spanfläche bzw. an die zugehörige Freiflächenfase und Spanflächenfase. Bevorzugt sind jedoch verrundete Schneidkanten mit einem Krümmungsradius, wobei die Krümmung bezüglich des Schneidkeils im Wesentlichen konvex, d. h. nach aussen gewölbt, ist. Hierbei ist es nicht erforderlich, dass die Freiflächen und/oder die Spanflächen bzw. die zugehörigen Abfasungen tangential und glatt in die gekrümmten Schneidenflächen übergehen. Es können durchaus auch Ausführungsformen vorteilhaft sein, bei welchen der Krümmungsradius der Schneidenflächen im Vergleich zu einer Breite der Schneidenflächen gross ist, derart, dass die Schneidenflächen kantig in die angrenzenden Flächenabschnitte übergehen.

Bei üblichen Herstellungsverfahren zur Verrundung von Schneidkanten kommen typischerweise Strahlverfahren wie beispielsweise Nassstrahlverfahren zum Einsatz. Schneidenverrundungen können als Variante aber auch durch Bürstverfahren erzeugt werden. Die zur Erzeugung von verrundeten Schneiden geeigneten Verfahren haben typischerweise den Nachteil, dass nur eine geringe Bearbeitungsgenauigkeit möglich ist und sich die Bearbeitung nur schwierig auf vorgegebene Bearbeitungsbereiche am Fräswerkzeug begrenzen lässt. Eine gut kontrollierte, insbesondere flächig genau begrenzte Ausbildung der Schneidkantenverrundung ist somit kaum möglich und zwingt den Hersteller bei der Ausbildung vorteilhafter Schneidkanten-Geometrien Kompromisse hinsichtlich der Herstellungspräzision einzugehen. Insbesondere ist ein Übergang der Schneidenflächen auf die angrenzenden Freiflächen bzw. Spanflächen kaum exakt ausführbar und resultiert aufgrund der sich so ergebenden Unregelmässigkeiten in einer Erhöhung des Werkzeugverschleisses.

Eine bevorzugte Ausführungsform des erfindungsgemässen Fräswerkzeugs schafft hierbei Abhilfe und ermöglicht eine exakte Ausführung einer verrundeten Schneidkante ohne Einbussen bei der Werkzeugpräzision in Kauf nehmen zu müssen. Bei der vorliegenden Ausführungsform umfasst beispielsweise jede Schneidkante eine gemäss dem Rundungsradius gewölbte Schneidenfläche, welche von dem vergüteten Freiflächenabschnitt der zugehörigen Freifläche und gegebenenfalls auch dem vergüteten

Spanflächenabschnitt begrenzt ist. Bei der Herstellung werden hierbei zunächst weitgehend scharfe Schneidkanten ausgebildet und mit vergleichsweise geringer Genauigkeit hinsichtlich der Begrenzung der Schneidenflächen mit einer mechanischen Oberflächenbearbeitung, insbesondere einem Strahlverfahren oder einem Bürstverfahren, verrundet. Die derart ausgebildeten gewölbten Schneidenflächen erstrecken sich typischerweise auf die angrenzenden Frei- und Spanflächen.

Im Gegensatz zum Verrundungsverfahren lässt sich eine Oberflächenvergütung von ebenen Flächen jedoch mit hoher Präzision, insbesondere flächig vergleichsweise exakt begrenzt, durchführen. Erfindungsgemäss wird daher die Oberflächenbearbeitung der Freiflächenabschnitte längs der Schneide und allenfalls der behandelten Spanflächenabschnitte erst nach der Verrundung der Schneiden vorgenommen. Dadurch können die gewölbten Schneidenflächen exakt und mit hoher Präzision durch die nachträgliche Oberflächenbearbeitung der behandelten Freiflächen- und allenfalls Spanflächenabschnitte begrenzt werden. Diejenigen Bereiche der Freiflächen und allenfalls der Spanflächen, welche vom Schleif- bzw. Strahl- oder Bürstvorgang der Schneidkantenverrundung betroffen sind und beim fertig gestellten Fräswerkzeug unerwünscht sind, werden durch die glättende Oberflächenbearbeitung entfernt. Insbesondere lassen sich damit die gekrümmten Schneidenflächen im Gegensatz zu bekannten Herstellungsverfahren nicht nur exakt begrenzen, sondern auch auf Bereiche mit Dimensionen, insbesondere Breiten quer zur Schneide, begrenzen, wie sie alleine durch die herkömmlichen Verrundungsverfahren nicht oder nur sehr aufwändig herstellbar wären. Die gewölbten Schneidenflächen eines so geschaffenen erfindungsgemässen Fräswerkzeugs ist somit an den zugehörigen Freiflächen von den mit einer Oberflächenbehandlung versehenen Freiflächenabschnitten begrenzt, insbesondere im Falle von behandelten Spanflächenabschnitten an den Spanflächen zudem von den behandelten Spanflächenabschnitten begrenzt.

Die oben beschriebenen verschiedenen Ausführungen des erfindungsgemässen Fräswerkzeugs vermögen die Verschleisseigenschaften des Fräswerkzeugs günstig zu beeinflussen und eine Standzeit des Werkzeugs deutlich zu verlängern. Für einen Benutzer des Werkzeugs ist es jedoch zudem ein Bedürfnis, einen aktuellen Verschleisszustand des Werkzeugs auch auf einfache Art erkennen zu können, um beispielsweise Abschätzen zu können, wann ein Fräswerkzeug ausgewechselt werden muss. Die im Folgenden beschriebenen weiteren bevorzugten Ausführungsformen des Fräswerkzeugs werden dieser Anforderung gerecht, indem eine Verschleissindikatorbeschichtung am Werkzeug vorgesehen ist, welche eine visuelle Beurteilung eines Verschleissfortschritts direkt am Fräswerkzeug erlaubt. Insbesondere sind hierfür Verschleissindikatorbeschichtungen geeignet, welche sich farblich von einem Werkzeugkörper bzw. von allfälligen anderen Beschichtungen des Werkzeugs unterscheiden, d. h. beispielsweise Farbbeschichtungen. Bei einer Abnutzung bzw. einem Verschleiss des Fräswerkzeugs wird die Verschleissindikatorbeschichtung zumindest teilweise abgeschliffen bzw. erodiert, was sich aufgrund der Farbgebung der Verschleissindikatorbeschichtung visuell einfach erkennen lässt.

Insbesondere sind mit Vorteil diejenigen Bereiche der Freiflächen mit einer Verschleissindikatorbeschichtung versehen, welche ausserhalb der Freiflächenfase bzw., im Falle mehrerer mit einer derartigen Fase versehenen Schneiden, der mehreren Freiflächenfasen liegen. Bei einem Werkzeugverschleiss entstehende Verschleissmarken erstrecken sich in diesem Fall mit zunehmendem Verschleiss von der Schneide her in die mit der Verschleissindikatorbeschichtung versehenen Bereiche der Freifläche, wodurch die Beschichtung zunehmend abgeschliffen wird. Damit wird eine wachsende Breite der Verschleissmarken und somit ein fortschreitender Verschleiss des Werkzeugs farblich erkennbar. Insbesondere ergibt sich aufgrund des Freiwinkels der Freiflächen durch den Verschleiss ein schräger Anschliff der Verschleissindikatorbeschichtung. Im Laufe der Abnutzung des Werkzeugs vergrössert sich der azimutale Abstand des Anschliffs von der Schneide. Ist die Verschleissindikatorbeschichtung beispielsweise von einer andersfarbigen Schicht überdeckt, ergibt sich aufgrund des schrägen Anschliffs eine Linie auf den Freiflächen, welche gut sichtbar eine Begrenzung der momentanen Verschleissmarke anzeigt.

Um eine aktuelle Verschleissmarkenbreite farblich besser erkennbar am Werkzeug zu kennzeichnen, umfasst eine weitere bevorzugte Ausführungsform des Fräswerkzeugs auch eine Verschleissindikatorbeschichtung bzw. eine Beschichtung mit einer Farbe oder einem Farbindikator auf der Spanfläche. Die Verschleissmarken sind in diesem Fall beidseitig durch einen schrägen bzw., in einem Spezialfall einer rein radialen Ausrichtung der Spanfläche (Spanwinkel 0 Grad), senkrechten Anschliff der Verschleissindikatorbeschichtungen gekennzeichnet. Mit einer derartigen in azimutaler Richtung beidseitigen farblichen Begrenzung der aktuellen Verschleissmarken wird die Überwachung eines Fortschritts des Werkzeugverschleisses weiter verbessert.

Besonders bevorzugt ist die erfindungsgemässe Verschleissindikatorbeschichtung bei einer Ausführungsformen des Fräswerkzeugs mit einem Rücksprung zwischen Freiflächenfasen und der zugehörigen Freifläche, d. h. einer Ausführungsform mit einer Verschleissleiste. In diesem Fall ergibt sich der Vorteil, dass der schräge Anschliff der Verschleissindikatorbeschichtung erst dann auftritt, wenn die gesamte radiale Höhe des Rücksprungs bzw. der Verschleissleiste wegerodiert ist und ein Verschleiss der übrigen Freifläche beginnt. In diesem Fall indiziert das Erscheinen des schrägen Anschliffs der Verschleissindikatorbeschichtung die vollständige Erosion der Verschleissleisten und damit beispielsweise das Ende der Lebensdauer des Fräswerkzeugs. Es versteht sich hierbei, dass der Verschleiss der Freifläche nicht zu einem klar definierten Zeitpunkt zu geschehen braucht. Bei einer Ausführungsform mit konkav gekrümmten Übergangsflächen kann ein Verschleiss der übrigen Freiflächen beispielsweise fliessend geschehen.

Unabhängig von der konkreten Ausführung der Übergänge von der Freiflächenfase in die Freiflächen haben Ausführungen mit Rücksprung bzw. mit Freiflächenfasen auf Verschleissleisten den Vorteil, dass ein Zeitpunkt, bei welchem eine Verschleissindikatorbeschichtung angeschliffen wird, durch die Freiflächengeometrie vorgebbar ist. Insbesondere können mit der Geometrie des Übergangs ein Beginn und/oder eine Rate des Abschliffs der Verschleissindikatorbeschichtung vorgegeben werden.

Zur zusätzlichen Indikation einer Erstbenutzung kann am Werkzeug eine Verschleissindikatorbeschichtung auf den Freiflächenfasen und gegebenenfalls auf den Spanflächenfasen am Werkzeug vorgesehen sein. Die derartige Beschichtung der Fasenflächen wird aufgrund des dort auftretenden initialen Verschleisses bereits bei der Erstbenutzung weitgehend wegerodiert. Damit kann ein Benutzer aufgrund der so erzeugten blanken Fasenflächen auf einen Blick beurteilen, ob ein Werkzeug fabrikneu ist oder bereits benutzt wurde.

In einer weiteren vorteilhaften Ausführungsform weist ein erfindungsgemässes Fräswerkzeug eine Vergütungsbeschichtung zumindest auf den Frei- und/oder Spanflächen auf. Allfällig vorhandene Verschleissindikatorbeschichtungen, wie sie oben beschrieben sind, sind dabei bevorzugt von der Vergütungsschicht überdeckt, können aber grundsätzlich auch auf der Vergütungsschicht ausgebildet sein. Die Vergütungsschicht hat dabei insbesondere zum Ziel, einen Verschleiss zu mindern und die Härte und Haltbarkeit der erfindungsgemässen Fräswerkzeuge zu erhöhen. Bekannte Vergütungsschichten umfassen dabei Hartstoffbeschichtungen wie beispielsweise TiAlN (Titanaluminiumnitrid - schwarze Färbung), TiAlCN (Titanaluminiumcarbonitrid - rötliche Färbung) oder TiN (Titannitrid - goldene Färbung). Weitere bekannte Hartstoffe umfassen chrombasierte Schichten wie CrN (Chromnitrid), CrAlN (Chromaluminiumnitrid), TiAlCrN (Titanaluminiumchromnitrid), aber auch Mono- oder Polykristalline Diamantbeschichtungen und deren Kombinationen. Weiter sind auch Hartstoffbeschichtungen bekannt, bei welchen Hartstoff-Phasen in eine Matrix-Schicht eingebettet sind (z.B. zweiphasige Komposit-Schichten, Nano-Komposit Schichten).

Die Beschichtungen werden überwiegend beispielsweise in "Physical Vapour Deposition-" (PVD-), "Chemical Vapour Deposition-" (CVD-) oder "Plasma Enhanced Chemical Vapour Deposition-" (PECVD-) Verfahren abgeschieden. Die verschiedenen Materialien für die Vergütungsbeschichtung haben im Wesentlichen zum Ziel, dem Werkzeug eine höhere Standzeit zu verleihen, wobei die oben beschriebenen Hartstoffe keine abschliessende Aufzählung bilden.

Wie sich aufgrund der teilweise verschiedenen Färbungen der Hartstoffe zeigt, können ebendiese Materialien, beispielsweise in einer Doppelfunktion als Farbindikator- und Vergütungsbeschichtung, auch für die oben beschriebenen Verschleissindikatorbeschichtungen zur Anwendung kommen. Es ist z. B. denkbar, dass eine goldfarbene TiN-Beschichtung von einer anders gefärbten Schicht überdeckt wird. Der oben beschriebene schräge Anschliff der Verschleissindikatorbeschichtung ist dann als goldene Linie sichtbar, deren Abstand von der Schneide sich mit fortschreitendem Verschleiss vergrössert. Ebenso können auch die anderen Materialien mit weiteren Färbungen zur Anwendung kommen. Insbesondere können die Verschleissindikatorbeschichtung und die Vergütungsbeschichtung derart gewählt werden, dass sich ein besonders gut erkennbarer Farbkontrast beim schrägen Anschliff der Farbindikatorschicht und der Vergütungsbeschichtung ergibt.

Dabei ist beispielsweise auch denkbar, dass eine Verschleissindikatorschicht auf der Freiflächenfase mit einer beispielsweise transparenten Vergütungsschicht überdeckt ist. Die farbige Verschleissindikatorbeschichtung ist in diesem Fall durch die Vergütungsbeschichtung geschützt bis diese vollständig erodiert ist. Beginnt im Verlaufe der Werkzeugbenutzung die Verschleissindikatorbeschichtung zu verschleissen, so ist dies ein Anzeichen für eine Erschöpfung der Vergütungsbeschichtung.

Es versteht sich, dass Vergütungsbeschichtungen auch am Fräswerkzeug vorgesehen sein können, ohne dass eine Verschleissindikatorbeschichtung vorhanden ist. Weiter bilden die oben beschriebenen Beschichtungen keine abschliessende Liste möglicher Beschichtungen des erfindungsgemässen Werkzeugs. Der Vollständigkeit halber sei hier erwähnt, dass bei einem erfindungsgemässen Fräswerkzeug selbstverständlich auch Weichstoffbeschichtungen zur Verbesserung der Spanabfuhr ausgebildet sein können und/oder weitere Beschichtungen, welche für eine vorteilhafte Ausbildung des Werkzeugs denkbar sind. Insbesondere können die vorgängig beschriebenen Merkmale in beliebiger Weise im Rahmen der Erfindung miteinander kombiniert werden, sodass sich auch weitere Ausgestaltungen des erfindungsgemässen Werkzeugs ergeben, welche hier nicht beschrieben sind.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen schematisch:

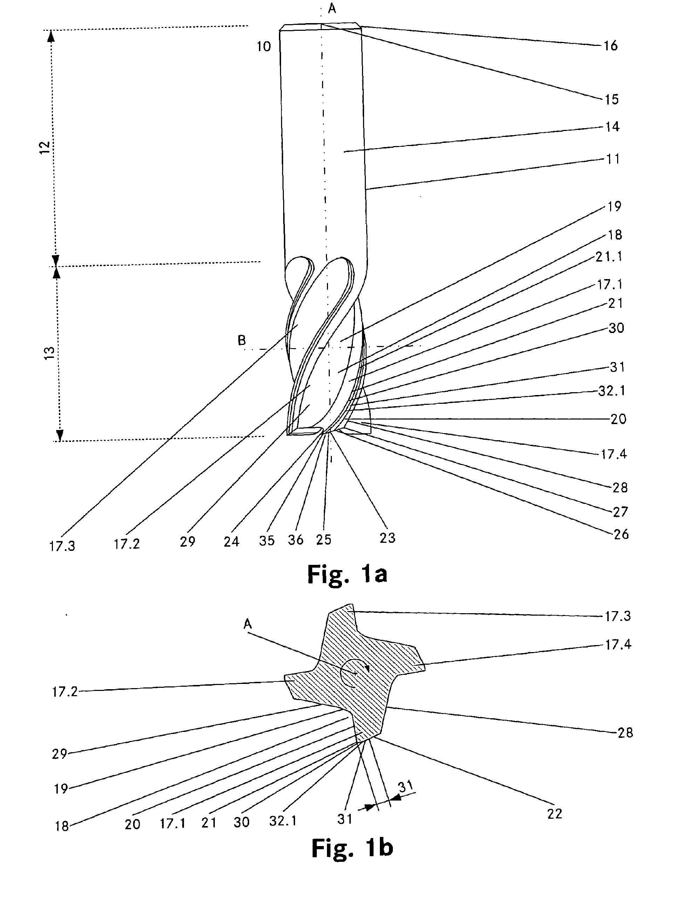

- Fig. 1a: Aussenansicht eines erfindungsgemässen Vollfräswerkzeugs;
- Fig. 1 b: Querschnitt durch einen Arbeitsbereich eines Vollfräswerkzeugs;
- Fig. 2: einen Ausschnitt eines Querschnitts durch einen einzelnen Schneidezahn, bei welchem sich der vergütete Freiflächenabschnitt über die Freiflächenfase hinaus auf die Freifläche erstreckt;
- Fig. 3: einen Ausschnitt einer weiteren Ausführungsform eines Schneidezahns, bei welchem die Freifläche und die Spanfläche vergütete Abschnitte aufweisen, welche an Fasen der jeweiligen Fläche heranreichen;
- Fig. 4: einen Ausschnitt einer weiteren Ausführungsform eines Schneidezahns mit einer durch einen Rücksprung abgesetzten Freiflächenfase;
- Fig. 5: einen Ausschnitt einer weiteren Ausführungsform eines Schneidezahns mit einer Schneidkantenverrundung;
- Fig. 6: einen Ausschnitt einer weiteren Ausführungsform eines Schneidezahns mit einer Schneidkantenverrundung;
- Fig. 7: einen Ausschnitt einer weiteren Ausführungsform eines Schneidezahns mit einer durch einen Rücksprung abgesetzten Freiflächenfase und einer Verschleissindikator- sowie einer Vergütungsbeschichtung.
Grundsätzlich sind in den Figuren gleiche Teile mit gleichen Bezugszeichen versehen.

### Wege zur Ausführung der Erfindung

Figur 1a zeigt ein erfindungsgemässes Vollfräswerkzeug 10 in einer Ausführung als Schaftfräser. Das Werkzeug 10 weist einen im Wesentlichen kreiszylindrischen Grundkörper 11 mit einer Längsachse A auf. Der Grundkörper 11 ist dabei in seiner Längsrichtung in einen Haltebereich 12 und einen Arbeitsbereich 13 unterteilt. Figur 1b zeigt eine schematische Ansicht eines Querschnitts durch das Fräswerkzeug 10 in einer Ebene B, welcher senkrecht auf der Längsachse A steht und das Fräswerkzeug 10 im Arbeitsbereich 13 schneidet.

In der Darstellung der Fig. 1a ist der Haltebereich als kreiszylindrischer Schaft 14 ausgebildet, welcher beispielsweise in einem entsprechenden Futter einer Fräsmaschine aufgenommen und gehalten werden kann. Zum vereinfachten Einbringen in ein Bohrfutter weist der Schaft 14 am haltebereichsseitigen Längsende 15 des Grundkörpers 14 eine Abfasung 16 auf.

Im Arbeitsbereich 13 sind vier wendelförmig verlaufende Schneidzähne 17.1-17.4 ausgebildet, welche über die Länge des Arbeitsbereichs 13 etwa eine Vierteldrehung aufweisen. Im Folgenden wird exemplarisch der Schneidezahn 17.1 beschrieben, wobei sich die übrigen Schneidzähne 17.2-17.4 nur durch ihre azimutal um 90 Grad versetzte Anordnung am Werkzeug 10 unterscheiden. In Drehrichtung des Werkzeugs 10 ist vor dem Schneidezahn 17.1 eine Spannut 18 ausgestaltet. Eine Innenwandung 19 der Spannut 18 umfasst dabei eine Spanfläche 20 des Schneidezahns 17.1 sowie eine Rückseite 29 des in Drehrichtung vor dem Schneidezahn 17.1 angeordneten Schneidezahns 17.2.

Eine radial am weitesten von der Längsachse A entfernte wendelförmige Kante 21.1 am Schneidezahn 17.1 bildet eine Hauptschneide 21 des Werkzeugs 10. Bezüglich der Drehrichtung hinter der Schneide 21 ist eine Freifläche 22 ausgebildet, welche sich ausgehend von der Schneide 21 über ca. 20 Grad in azimutaler Richtung erstreckt. Ein radialer Abstand der Oberfläche der Freifläche 22 von der Längsachse A nimmt dabei mit zunehmendem azimutalen Abstand von der Schneide 21 stetig ab. An einem arbeitsbereichseitigen Längsende 23 des Werkzeugs 10 ist stirnseitig, zur Schneide 21 gehörig, eine Nebenschneide 24 ausgebildet, wobei die Spanfläche 20 auch als eine Spanfläche der Nebenschneide 24 wirkt. Die Nebenschneide 24 weist hinter der Nebenschneide 24 eine Neben-Freifläche 25 auf, welche einerseits mantelseitig in einer Kante 26 mit der Freifläche 22 aneinander stösst und andererseits an einer weitgehend radial ausgerichteten Kante 27 in eine Rückseite 28 des Schneidzahns 17.1 übergeht.

Erfindungemäss weist das Fräswerkzeug 10 eine Freiflächenfase 30 auf, welche längs der Schneide 21 ausgebildet ist. Die Freiflächenfase 30 ist dabei vollständig von einem Freiflächenabschnitt 31 der Freifläche 22 umfasst, welcher erfindungsgemäss mit einer Oberflächenbehandlung, d. h. beispielsweise mit einem Feinschliff oder einer Politur, versehen ist. Die Oberflächenbehandlung erfolgt beispielsweise aufgrund einer mechanischen Oberflächenbearbeitung, mit welcher eine Rauheit im vergüteten Abschnitt 31 gegenüber der entsprechenden Rauheit einer unbehandelten Freifläche, wie sie sich nach einer Fertigung wie beispielsweise einem Schleifen oder Sintern des Werkzeugs auf Endmass ergibt, verringert wird.

Der derart behandelte Freiflächenabschnitt 31 reicht dabei bis an die Schneide 21 heran und erstreckt sich im Wesentlichen längs der gesamten Schneide 21. Der Freiflächenabschnitt 31 überdeckt in aziumtaler Richtung etwa die halbe Breite der Freifläche 22, d. h. über einen azimutalen Winkel von etwa 10 Grad. Insbesondere liegt damit auch ein Übergang 32 der Freiflächenfase 30 in die Freifläche 22 innerhalb des vergüteten Abschnitts 31. In der Darstellung der Fig. 1a und 1b umfasst der Übergang 32 eine Kante 32.1. Indem der Übergang 32 ebenfalls innerhalb des vergüteten Freiflächenabschnitts 31 angeordnet ist, kann die Kante 32.1 mit Vorteil sehr genau definiert ausgeführt werden, d. h. die Kante 32.1 ist scharf und weist eine geringe Schartigkeit auf und bietet somit wenig Angriffspunkte für ein Ausbrechen bzw. Abbröckeln der Freiflächenfase 30 an einer von der Schneide 21 abgewandten Begrenzung, d. h. am Übergang 32.

Eine azimutale Breite der Freiflächenfase 30 liegt gemäss der Erfindung unterhalb von 70 Mikrometern, insbesondere im Bereich von 30 bis 50 Mikrometern. Die Freiflächenfase 30 sowie der behandelte Freiflächenabschnitt 31 sind daher in der Darstellung der Fig. 1a und 1b unverhältnismässig gross dargestellt, um die Anordnung der Freiflächenfase 30 bzw. des Freiflächenabschnitts 31 am Schneidzahn 17.1 besser zu verdeutlichen.

In der Darstellung der Fig. 1a weist die Nebenschneide 24 ebenfalls eine Abfasung 35 der Neben-Freifläche 25 auf. Dabei ist denkbar, dass die Neben-Freiflächenfase 35 analog der Freiflächenfase 30 innerhalb eines Neben-Freiflächenabschnitts 36 liegt, welcher ebenfalls mit einer glättenden Oberflächenbearbeitung behandelt wurde. Die derart behandelte Oberfläche des Freiflächenabschnitts 36 weist dabei bevorzugt eine vergleichbare Rauheit auf, wie die Oberfläche im Freiflächenabschnitt 31.

Es versteht sich, dass die Darstellungen der Fig. 1a und 1b nur eine mögliche Ausführungsform der Erfindung zeigen und die Erfindung nicht auf derartige Fräswerkzeuge beschränkt ist.

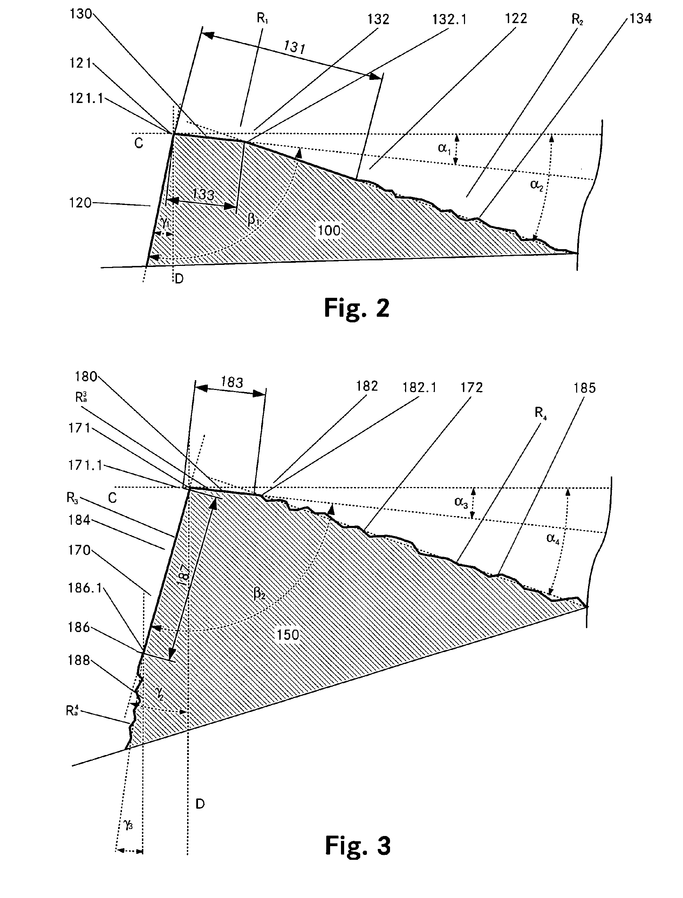

Figur 2 zeigt schematisch einen Ausschnitt eines Querschnitts durch einen einzelnen Schneidezahn 100 eines erfindungsgemässen Fräswerkzeugs in der Querschnittsebene B der Fig. 1a. In der Fig. 2 sind zwei Referenzebenen des Schneidzahns 100 dargestellt: Einerseits die Werkzeug-Bezugsebene D, welche senkrecht zur angenommenen Schnittrichtung des Schneidzahns 100 steht und andererseits die Werkzeug-Schneidenebene C, welche von einer die Schneide 121 enthaltende Ebene senkrecht zur Wirk- bzw. Werkzeug-Bezugsebene D gebildet ist.

Der Schneidezahn 100 umfasst eine Freifläche 122 und eine Spanfläche 120. Die Freifläche 122 weist dabei eine Freiflächenfase 130 auf. In einem Übergangsbereich zwischen der Freiflächenfase 130 und der Spanfläche 120 ist die Schneide 121 angeordnet, welche eine Schneidkante 121.1 umfasst. Die Schneidkante 121.1 ergibt sich dabei durch Aneinanderstossen der Freiflächenfase 130 und der Spanfläche 120. In einem Abstand 133 von der Schneide 121 geht die Freiflächenfase 130 in einem Übergangsbereich 132 in die Freifläche 122 über. In der Darstellung der Fig. 2 umfasst der Übergangsbereich 132 eine Kante 132.1, an welcher die Freiflächenfase 130 in die Freifläche 122 übergeht. Der Abstand 133, d. h. die Breite der Freiflächenfase 130, beträgt bevorzugt weniger als 70 Mikrometer, insbesondere liegt der Abstand 133 in einem Bereich von etwa 30 bis 50 Mikrometern.

Erfindungsgemäss ist auf der Freifläche 122 ein Freiflächenabschnitt 131 ausgebildet, welcher mit einer glättenden Oberflächenbehandlung versehen ist. Im behandelten Freiflächenabschnitt 131 ist eine Rauheit R₁ geringer als eine entsprechende Rauheit R₂ der übrigen, unbehandelten Bereiche 134 der Freifläche 122. Der behandelte Freiflächenabschnitt 131 erstreckt sich über eine Distanz 131.1 von der Schneide 121 auf die Freifläche 122. In der Darstellung der Fig. 2 entspricht der Abstand 131.1 etwa der 2.5-fachen Distanz der azimutalen Breite 133 der Freiflächenfase 122. Am Schneidezahn 100 ist die Spanfläche 120 im dargestellten Ausschnitt an der Schneide 121 erfindungsgemäss ebenfalls mit einer glättenden Oberflächenbehandlung versehen und weist eine Rauheit auf, welche mit der Rauheit R₁ des behandelten Freiflächenabschnitts 131 vergleichbar ist.

Ein Freiwinkel α₁ der Freiflächenfase 130 ist dabei kleiner als ein Freiwinkel α₂ der Freifläche 122. Mit Freiwinkel ist hierbei ein Winkel zwischen dem jeweiligen Freiflächenabschnitt, d. h. beispielsweise der Freiflächenfase 130, bzw. der Freifläche 122 und der Werkzeug-Schneidenebene C bezeichnet. Bevorzugt ist der Winkel α₁ kleiner als 10 Grad, insbesondere liegt er im Bereich von im Wesentlichen 1 bis 7 Grad. Der Freiwinkel α₂ ist bevorzugt kleiner als 40 Grad und liegt insbesondere weitgehend im Bereich von 25 bis 35 Grad.

Ein Spanwinkel γ₁ der Spanfläche 120 ist betragsmässig dabei derart gewählt, dass sich zwischen der Freiflächenfase 130 und der Spanfläche 120 ein stumpfer Keilwinkel β₁ ergibt, d. h. der Keilwinkel β₁ ist grösser oder gleich 90 Grad. Der Spanwinkel γ₁ bezeichnet hierbei einen Winkel zwischen der Spanfläche 120 und der Werkzeugbezugsebene C, wobei der Spanwinkel γ₁ hierbei negativ ist, d. h. die Spanfläche liegt in azimutaler Richtung vor der Schneide 121. Der Spanwinkel γ₁ ist somit grösser oder gleich dem Freiwinkel α₁.

Figur 3 zeigt einen schematischen Ausschnitt einer weiteren Ausführungsform eines Schneidezahns 150 in einem Querschnitt in der Ebene B. Eine Spanfläche 170 des Schneidezahns 150 weist hierbei eine Spanflächenfase 184 auf, welche einen Spanwinkel γ₂ hat, der betragsmässig grösser ist als ein Spanwinkel γ₃ der Spanfläche 170. Die Spanflächenfase 184 stösst in einer Schneidkante 171.1 an eine Freiflächenfase 180 einer Freifläche 172. Die Freiflächenfase 180 weist einen Freiwinkel α₃ auf, welcher betragsmässig weitgehend dem Freiwinkel α₁ in Fig. 2 entspricht. Der Winkel γ₂ ist derart gewählt, dass ein Keilwinkel β₂ zwischen der Freiflächenfase 180 und der Spanflächenfase 184 grösser oder gleich 90 Grad ist.

Die Spanflächenfase 184 geht in einem Abstand 187 von einer die Schneidkante 171.1 umfassenden Schneide 171 in einem Übergangsbereich 186 an einer Kante 186.1 in die Spanfläche 170 über. Der Abstand 187, d. h. die Breite der Spanflächenfase 184, liegt dabei in der Grössenordnung eines Millimeters, bevorzugt bei etwa 0.5 mm.

Analog zur Darstellung der Fig. 2 geht die Freiflächenfase 180 in einem Abstand 183 von der Schneide 171 in einem Übergangsbereich 182 an einer Kante 182.1 in die Freifläche 172 über, welche einen Freiwinkel von α₄ hat. Der Freiwinkel α₄ entspricht dabei betragsmässig weitgehend dem Freiwinkel α₂ der Fig. 2.

In der Darstellung der Fig. 3 sind die Freiflächenfase 180 sowie die Spanflächenfase 184 erfindungsgemäss mit einer glättenden Oberflächenbehandlung versehen. Die Freiflächenfase 180 sowie die Spanflächenfase 184 bilden also in dieser Ausführungsform die behandelten Abschnitte der Freifläche 172 bzw. der Spanfläche 170. Insbesondere weisen die Fasen 180 und 184 eine Rauheit R₃ auf, welche geringer ist als eine entsprechende Rauheit R₄ von an die Fasen 180 und 184 angrenzenden unbehandelten Bereichen 185 und 188 der Freifläche 172 bzw. der Spanfläche 170.

Mit der Oberflächenbehandlung der beiden Fasen 180 und 184 ist es auf vorteilhafte Weise möglich, die Schneidkante 171.1 sehr genau definiert ausführen zu können bzw. mit einer vergleichsweise geringen Schartigkeit und entsprechend scharf ausbilden zu können. Zudem weisen die besonderes beanspruchten Bereiche an der Schneide 171 eine vergleichsweise geringe Rauheit R₃ auf, wodurch sich bei einer Erstbenutzung des Werkzeugs ein für eine spätere geringere Verschleissrate, und damit für eine längere Standzeit, besonders günstiger initialer Verschleiss des Werkzeugs ergibt.

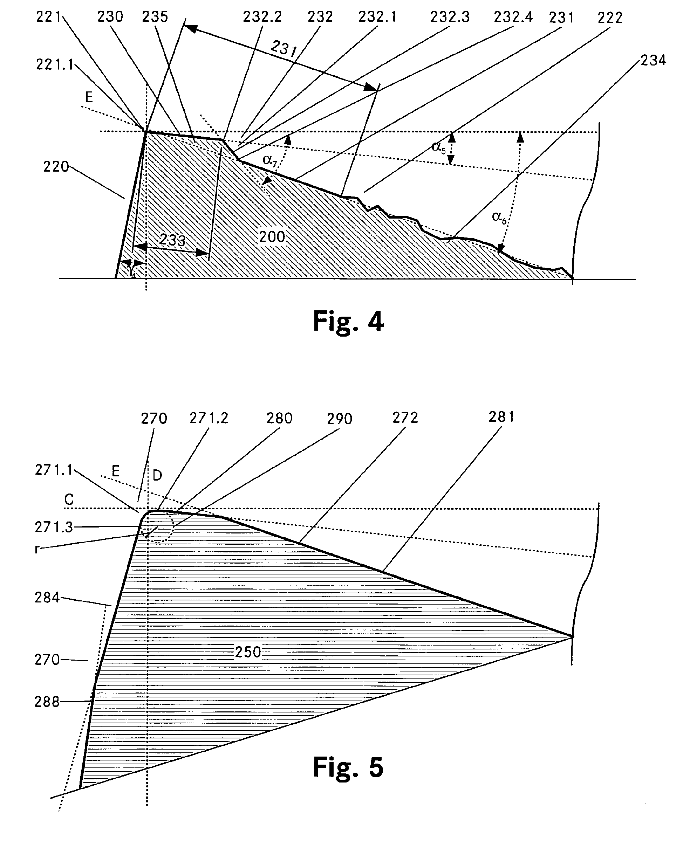

Figur 4 zeigt eine weitere Ausführungsform eines erfindungsgemässen Schneidezahns 200 in einem schematischen Querschnitt in der Ebene B. Im Gegensatz zu den Darstellungen der Fig. 2 und 3 umfasst ein Übergang 232 von einer Freiflächenfase 230 auf eine Freifläche 222 des Schneidezahns 200 einen stufenartigen Absatz 232.1. Ausgehend von einer Schneidkante 221.1 einer Schneide 221 des Schneidezahns 200 erstreckt sich die Freiflächenfase 230 unter einem Freiwinkel α₅ über eine azimutale Breite 233 und geht im Abstand 233 von der Schneide 221 in einer Kante 232.2 in eine Übergangsfläche 232.3 über. Die Übergangsfläche 232.3 ist dabei eben und weist einen Freiwinkel α₇ auf, welcher grösser als der Freiwinkel α₅ der Freiflächenfase 230 und grösser als ein Freiwinkel α₆ der Freifläche 222 ist. Die Übergangsfläche 232.3 erstreckt sich von der Kante 232.2 bis an eine Ebene E der Freifläche 222 heran, wo sie in einer weiteren Kante 232.4 in die Freifläche 222 übergeht. Der sich so ergebende stufenartige Absatz 232.1 bildet den Übergang 232 zwischen der Freifläche 222 und der Freiflächenfase 230. Aufgrund des Absatzes 232.1 ergibt sich damit längs der Schneide 221 ein leistenartiger Vorsprung 235 auf der Freifläche 222, welcher die Freiflächenfase 230 trägt bzw. auf dessen mantelseitiger Oberfläche die Freiflächenfase 230 ausgebildet ist.

Ein erfindungsgemäss mit einer glättenden mechanischen Oberflächenbehandlung versehener Freiflächenabschnitt 231 erstreckt sich von der Schneide 221 über die Freiflächenfase 230 und den Übergang 232 hinaus auf die Freifläche 222. Insbesondere erstreckt sich der Abschnitt 231 über eine Breite 231.1 hinter der Schneide 221, welche etwa doppelt so breit ist wie eine Breite 233 der Freiflächenfase 230. Im Abstand 231.1 von der Schneide 221 geht der vergütete Abschnitt 231 in die Bereiche 234 der Freifläche 222 über, welche mit keiner Oberflächenbehandlung versehen sind.

In der Darstellung der Fig. 4 ist eine Spanfläche 220, welche sich ausgehend von der Schneidkante 221.1 unter einem Spanwinkel γ₄ erstreckt, auf ihrer gesamten Fläche mit einer glättenden Oberflächenbehandlung versehen, welche der Oberflächenbehandlung des Abschnitts 231 der Freifläche 222 entspricht.

Figur 5 zeigt eine Darstellung eines Ausschnitts einer weiteren Ausführung eines Schneidezahns 250 in einem schematischen Querschnitt in der Ebene B. Der Schneidezahn 250 weist dabei eine Freifläche 272 und eine Spanfläche 270 auf, auf welchen eine Freiflächenfase 280 bzw. eine Spanflächenfase 284 ausgebildet ist. Ein Freiwinkel der Freifläche 272 bzw. der zugehörigen Fase 280 sowie ein Spanwinkel der Spanfläche 270 bzw. der zugehörigen Fase 284 entsprechen dabei weitgehend denjenigen der Fig. 2 bis 4. Zwischen der Freiflächenfase 280 und der Spanflächenfase 284 ist eine Schneide 271 angeordnet. In der Darstellung der Fig. 5 stossen die Fasen 280 und 284 jedoch nicht in einer Kante aneinander.

In einem Übergangsbereich zwischen den Fasen 280 und 284 ist eine Schneidenfläche 271.1 angeordnet, welche bezüglich des Schneidezahns 250 nach aussen, d. h. konvex, gewölbt ist. Ein gedachter Schmiegekreis 290 der Wölbung der Schneidenfläche 271.1 liegt dabei in der Querschnittsebene B und weist einen Radius r auf, welcher einen Krümmungsradius r der Schneidenfläche 271.1 bildet. In der dargestellten Ausführungsform ist der Krümmungsradius r derart bemessen, dass ein Übergang 271.2 der Schneidenfläche 271.1 in die Freiflächenfase 280 sowie ein Übergang 271.3 in die Spanflächenfase 284 glatt ist, d. h. die jeweiligen Fasen 280 und 284 im Übergang 271.2 und 271.3 im Wesentlichen tangential in die Schneidenfläche 271.1 übergehen. Anstatt einer Schneidkante, wie bei den vorherigen Ausführungsbeispielen, umfasst die Schneide 271 in der Ausführungsform der Fig. 5 die Schneidenfläche 271.1 und bildet somit eine verrundete Schneidkante.

In der Darstellung der Fig. 5 ist der gesamte dargestellte Bereich 288 der Spanfläche 270 mit einer glättenden Oberflächenbehandlung versehen. Ebenso überdeckt ein erfindungsgemäss behandelter Bereich 281 den gesamten dargestellten Bereich der Freifläche 272.

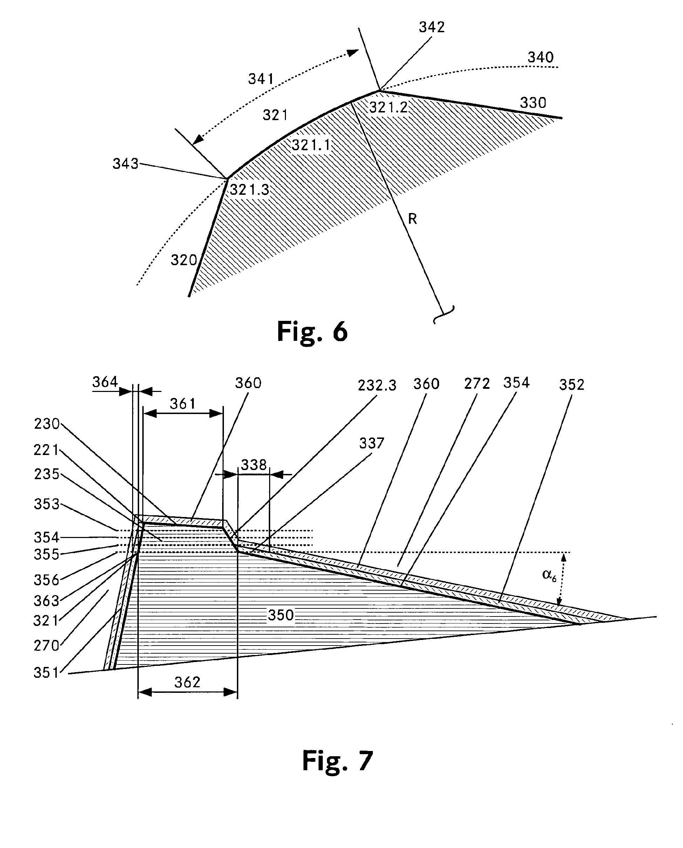

Figur 6 zeigt eine Darstellung eines Schneidezahns 300 in einem Bereich um eine Schneide 321 in einer schematischen Schnittansicht in der Ebene B. Insbesondere umfasst der Schneidezahn 300 eine Freiflächenfase 330 und eine Spanfläche 320. Die Schneide 321 des Schneidezahns 300 umfasst eine gekrümmte Schneidenfläche 321.1, welche an Übergängen 321.2 und 321.3 in die Freiflächenfase 330 bzw. die Spanfläche 320 übergeht. In der Darstellung der Fig. 6 ist im Gegensatz zur Darstellung der Fig. 5 ein Radius R eines gedachten Schmiegekreises 340 der Krümmung der Schneidenfläche 321.1 vergleichsweise gross gewählt, d. h. der Radius R ist grösser als eine der gekrümmten Oberfläche der Schneidenfläche 321.1 folgende Breite 341 der Schneidenfläche 321.1. Die Schneidenfläche 321.1 stösst daher jeweils in einer Kante 342 an die Freifläche 330 und in einer Kante 343 an die Spanfläche 320.

Figur 7 zeigt einen weitgehend der Ausführungsform 250 der Fig. 4 entsprechenden Schneidezahn 350. Im Gegensatz zu der Fig. 4 ist eine der Freifläche 272 entsprechende Freifläche 372 des Schneidezahns 350 jedoch gesamthaft mit einer Oberflächenbehandlung versehen. Weiter weisen im Unterschied zu der Darstellung der Fig. 4 die Spanfläche 220 sowie die Freifläche 272 in einem Bereich 236 ausserhalb der Freiflächenfase 230 und der Übergangsfläche 232.3 jeweils eine Beschichtung 351 und 352 mit einem Verschleissindikator auf. Mögliche Materialien für die Beschichtung umfassen dabei beispielsweise die oben erwähnten Hartstoffbeschichtungen wie TiAlN (Titanaluminiumnitrid - schwarze Färbung), TiAlCN (Titanaluminiumcarbonitrid - rötliche Färbung) oder TiN (Titannitrid - goldene Färbung). Gemäss der Darstellung der Fig. 7 ist der Schneidezahn 350 im gesamten dargestellten Ausschnitt mit einer Vergütungsbeschichtung 360 versehen. Insbesondere überdeckt die Vergütungsbeschichtung 360 auch die Verschleissindikatorbeschichtungen 351 und 352. Im Bereich der Freiflächenfase 230 und der Übergangsfläche 232.2 ist die Vergütungsbeschichtung 360 direkt auf den Schneidezahn 350 aufgebracht, während sie im Bereich der Verschleissindikatorbeschichtungen 351 und 352 auf den Verschleissindikatorbeschichtungen 351 und 352 ausgebildet ist. Materialien für die Vergütungsbeschichtung 360 umfassen Hartstoffe wie die oben genannten, aber auch sämtliche weiteren bekannten Hartstoffbeschichtungen für Fräswerkzeuge. Bevorzugt ist die Vergütungsbeschichtung 360 derart ausgebildet, dass sie eine Farbe der darunter liegenden Verschleissindikatorbeschichtungen 351 und 352 überdecken.

Weiter sind mit gestrichelten Linien 353 bis 356 verschiedene Stadien einer Erosion beim Verschleiss des Schneidezahns 350, insbesondere des die Freiflächenfase 230 tragenden Vorsprungs 335, angedeutet. Die gestrichelten Linien 353 bis 356 entsprechen dabei weitgehend einer Lage der jeweils aktuellen Werkzeug-Schneidenebene bei verschieden weit fortgeschrittenem Verschleiss des Werkzeugs, d. h. 353 bei geringem Verschleiss und 356 bei vergleichsweise fortgeschrittenem Verschleiss, während die Linien 354 und 355 intermediäre Verschleissstadien markieren.

Ist der Schneidezahn 350 bis zur Linie 353 abgenutzt, ist die Freiflächenfase 330 gerade vollständig erodiert, sodass kein Abschnitt der ursprünglichen Oberfläche der Freiflächenfase 330 mehr vorhanden ist. Insbesondere ergibt im dargestellten Querschnitt ein Schnittbereich der Linie 353 mit dem Vorsprung 235 eine Verschleissmarkenbreite 361.

Die Linie 356 markiert ein ausgezeichnetes Verschleissstadium. Ist der Schneidezahn 350 bis zur Linie 356 abgenutzt, so ist der Vorsprung 235 vollständig erodiert. D. h. eine durch die Linie 356 angedeutete momentane mantelseitige Kontaktfläche des Werkzeugs bzw. des Schneidezahns 350 geht direkt in die Freifläche 372 über, ohne dass ein Rücksprung vorhanden ist. Im dargestellten Querschnitt ergibt ein Schnittbereich der Linie 356 mit dem Vorsprung 235 eine Verschleissmarkenbreite 362. Wie aus der Fig. 7 weiter ersichtlich ist, ergibt sich aufgrund des Vorsprungs 235 bzw. aufgrund des Rücksprungs 232 über einen Bereich der Werkzeugerosion (Linien 353 bis 356) eine weitgehend konstante Verschleissmarkenbreite (vgl. Verschleissmarkenbreiten 361 mit 362 haben weitgehend gleiche Breite).

Mit anderen Worten beginnt bei einem bis zur Linie 356 fortgeschrittenem Verschleiss eine Erosion des übrigen Bereichs 336 der Freifläche 372. Mit dem Beginn der Erosion des übrigen Bereichs 336 ist auch ein Beginn der Erosion der dort ausgebildeten Beschichtungen 352 und 360 verbunden. Insbesondere ergibt sich gemäss der Linie 356 aufgrund des Hinterschliffs der Freifläche 372 bzw. des Freiwinkels _{α}6 ein schräger Anschliff 337 der Beschichtung 352, wobei die darüber liegende Vergütungsbeschichtung 360 im Bereich des schrägen Anschliffs 337 bereits wegerodiert ist. Aufgrund der Abnutzung gemäss der Linie 356 ist der schräge Anschliff 337 somit über eine Breite 338 gut sichtbar. Insbesondere ist der schräge Anschliff 337 im Abstand der Verschleissmarkenbreite 362 von einer aktuellen Schneide 321 und zu dieser im Wesentlichen parallel als Strich der Breite 338 sichtbar. Aufgrund der Farbgebung der Verschleissindikatorbeschichtung 352 ist der schräge Anschliff 337 gut erkennbar.

Die Verschleissindikatorbeschichtung 351 der Spanfläche 270 ist dabei aufgrund eines entsprechend dem Spanwinkel γ₄ weitgehend senkrechten Anschliffs 363 der Verschleissindikatorbeschichtung 351 von Beginn des Verschleisses an als dünner Strich einer Breite 364, welche weitgehend der Dicke der Beschichtung 351 entspricht, direkt vor der Schneide 321 (bzw. 221), gegebenenfalls von freiem Auge, sichtbar.

Der schräge Anschliff 237 und der senkrechte Anschliff 263 ergeben somit weitgehend ab einem Zeitpunkt der vollständigen Erosion des Vorsprungs 235 einen farblich abgesetzten Anzeiger für eine aktuelle Verschleissmarkenbreite 262.

Zusammenfassend ist festzustellen, dass die Erfindung ein Vollfräswerkzeug bereitstellt, welches aufgrund einer bereichsweisen glättenden Oberflächenbehandlung in besonders beanspruchten Bereichen deutlich verbesserte Verschleisseigenschaften und eine verlängerte Standzeit aufweist. Es versteht sich, dass die von den oben beschriebenen Ausführungsformen umfassten Merkmale im Rahmen der unabhängigen Ansprüche beliebig kombiniert werden und mit weiteren, hier nicht explizit beschriebenen bekannten und als vorteilhaft erachteten Merkmalen ergänzt werden können.

## Patentansprüche

1. Vollfräswerkzeug (10) zur rotierenden Materialbearbeitung mit einem länglichen Werkzeugschaft (11), welcher einen Arbeitsbereich (13) aufweist, in welchem mantelseitig Schneiden (21) mit zugehörigen Spanflächen und bezüglich einer Drehrichtung hinter den Schneiden angeordnete Freiflächen vorhanden sind, wobei an wenigstens einer Schneide (21) auf der zugehörigen Freifläche (22) eine Freiflächenfase (30) ausgebildet ist, **dadurch gekennzeichnet, dass** auf der zur wenigstens einen Schneide (21) gehörigen Freifläche (22) längs der wenigstens einen Schneide (21) ein Freiflächenabschnitt (31) mit einer glättenden Oberflächenbehandlung versehen ist, sodass eine Rauheit in diesem behandelten Freiflächenabschnitt (31) kleiner ist als eine entsprechende, aufgrund einer durch eine Fertigung des Vollfräswerkzeugs (10) auf Endmass erreichten, Rauheit der Freifläche (22).

2. Fräswerkzeug (10) nach Anspruch 1, **dadurch gekennzeichnet, dass** der behandelte Freiflächenabschnitt (31) sich ausgehend von der wenigstens einen Schneide (21) nicht weiter als 100 Mikrometer in azimutaler Richtung erstreckt.

3. Fräswerkzeug (10) nach einem der Ansprüche 1 bis 2, **dadurch gekennzeichnet, dass** die Freiflächenfase (30) vom behandelten Freiflächenabschnitt (31) vollständig umfasst ist, insbesondere der behandelte Freiflächenabschnitt (31) sich in azimutaler Richtung über die Freiflächenfase (30) hinaus auf die zur wenigstens einen Schneide (21) gehörige Freifläche (22) erstreckt.

4. Fräswerkzeug (10) nach einem der Ansprüche 1 bis 3, **dadurch gekennzeichnet, dass** eine azimutale Breite der Freiflächenfase (30) grösser als typische initiale Verschleissmarkenbreiten von Fräswerkzeugen (10) ist, insbesondere in einem Bereich von etwa 30 bis 50 Mikrometern liegt.

5. Fräswerkzeug nach einem der Ansprüche 1 bis 4, **dadurch gekennzeichnet, dass** ein Freiwinkel (α₂) der Freifläche (122) grösser ist als ein Freiwinkel (α₁) der Freiflächenfase (130), insbesondere der Freiwinkel (α₂) der Freifläche (122) im Bereich von 25 bis 35 Grad und der Freiwinkel (α₁) der Freiflächenfase (130) im Bereich von 1 bis 7 Grad liegt.

6. Fräswerkzeug nach einem der Ansprüche 1 bis 5, **dadurch gekennzeichnet, dass** die Freiflächenfase (130) in genau einer zur wenigstens einen Schneide (121) weitgehend parallelen Kante (132.1) in die zugehörige Freifläche (122) übergeht.

7. Fräswerkzeug nach einem der Ansprüche 1 bis 5, **dadurch gekennzeichnet, dass** die Freiflächenfase (230) über die Freifläche (222) erhaben ist, insbesondere von der Freifläche (222) stufenartig abgesetzt ist.

8. Fräswerkzeug nach einem der Ansprüche 1 bis 7, **dadurch gekennzeichnet, dass** an der wenigstens einen Schneide (171) auf der zugehörigen Spanfläche (170) eine Spanflächenfase (184) ausgebildet ist.

9. Fräswerkzeug nach einem der Ansprüche 1 bis 8, **dadurch gekennzeichnet, dass** die Spanflächenfase (184) eine Breite (187) von im Wesentlichen weniger als 0.5 mm aufweist.

10. Fräswerkzeug nach einem der Ansprüche 1 bis 9, **dadurch gekennzeichnet, dass** die Freifläche mit der Spanfläche (170) einen stumpfen Keilwinkel (β₁, β₂) einschliesst, insbesondere die Freiflächenfase (180) mit der Spanfläche (170) bzw. der allenfalls vorhandenen Spanflächenfase (184) einen stumpfen Winkel einschliesst.

11. Fräswerkzeug nach einem der Ansprüche 1 bis 10, **dadurch gekennzeichnet, dass** die Spanfläche im Wesentlichen über die gesamte Länge der Schneide einen Spanflächenabschnitt aufweist, welcher mit einer glättenden Oberflächenbehandlung versehen ist.

12. Fräswerkzeug nach Anspruch 11, **dadurch gekennzeichnet, dass** die Spanflächenfase vom oberflächenbehandelten Spanflächenabschnitt vollständig umfasst ist, insbesondere der behandelte Spanflächenabschnitt sich über die Spanflächenfase hinaus auf die übrige Spanfläche erstreckt.

13. Fräswerkzeug nach einem der Ansprüche 1 bis 12, **dadurch gekennzeichnet, dass** die Freifläche über eine Schneidenfläche (271.1) in die Spanfläche übergeht, insbesondere die Schneidfläche gewölbt ist, sodass die so gebildete Schneidkante eine Schneidkantenverrundung aufweist.

14. Fräswerkzeug nach Anspruch 13, **dadurch gekennzeichnet, dass** die gewölbte Schneidenfläche an der Freifläche von dem mit einer Oberflächenbehandlung versehenen Freiflächenabschnitt, insbesondere im Falle eines vorhandenen behandelten Spanflächenabschnittes an der Spanfläche von dem behandelten Spanflächenabschnitt, begrenzt ist.

15. Fräswerkzeug nach einem der Ansprüche 1 bis 14, **dadurch gekennzeichnet, dass** die Freifläche einen Indikatorabschnitt aufweist, welcher mit einer Verschleissindikatorbeschichtung, insbesondere einer Farbindikatorschicht, versehen ist, vorzugsweise die Verschleissindikatorbeschichtung an die Freiflächenfase heranreicht, insbesondere die Freiflächenfase von der Verschleissindikatorbeschichtung ausgenommen ist.

16. Fräswerkzeug nach einem der Ansprüche 1 bis 15, **dadurch gekennzeichnet, dass** die Spanfläche einen Indikatorabschnitt aufweist, welcher mit einer Verschleissindikatorbeschichtung versehen ist.

17. Fräswerkzeug nach einem der Ansprüche 1 bis 16, **dadurch gekennzeichnet, dass** die Freifläche und die Spanfläche mit einer Vergütungsbeschichtung, insbesondere einer verschleissmindernden Vergütungsbeschichtung, versehen ist, wobei im Fall einer Verschleissindikatorbeschichtung diese von der Vergütungsbeschichtung überdeckt ist.

18. Verfahren zur Herstellung eines Fräswerkzeugs, insbesondere eines Vollfräswerkzeugs nach einem der Ansprüche 1 bis 17, bei welchem ein Arbeitsbereich des Vollfräswerkzeugs mit Schneiden und zugehörigen Spanflächen sowie bezüglich einer Drehrichtung hinter den Schneiden angeordneten Freiflächen versehen wird, wobei an wenigstens einer Schneide eine Freiflächenfase auf der zugehörigen Freifläche ausgebildet wird, **dadurch gekennzeichnet, dass** ein Abschnitt der Freifläche der wenigstens einen Schneide nach der Fertigung des Vollfräswerkzeugs auf Endmass mit einer glättenden Oberflächenbehandlung versehen wird.

19. Verfahren nach Anspruch 18, **dadurch gekennzeichnet, dass** ein Abschnitt der Spanfläche der wenigstens einen Schneide nach der Fertigung des Vollfräswerkzeugs auf Endmass mit einer glättenden Oberflächenbehandlung versehen wird.

20. Verfahren nach einem der Ansprüche 18 bis 19, **dadurch gekennzeichnet, dass** eine zwischen der Freifläche und der Spanfläche angeordnete Schneidkante der wenigstens einen Schneide mit einer Oberflächenbehandlung, insbesondere einem Strahlverfahren, mit einer Kantenverrundung versehen wird, bevor der Abschnitt der Freifläche und, im Falle eines mit einer Oberflächenbehandlung versehenen Spanflächenabschnittes, auch bevor der Abschnitt der Spanfläche mit der glättenden Oberflächenbehandlung versehen wird.

21. Verfahren nach einem der Ansprüche 18 bis 20, **dadurch gekennzeichnet, dass** ein Bereich der Freifläche, insbesondere auch ein Bereich der Spanfläche, mit einer Verschleissindikatorbeschichtung versehen wird.
